# EUROPÄISCHE PATENTSCHRIFT

(11) **EP 4 497 983 B1**
(45) Veröffentlichungstag und Bekanntmachung des Hinweises auf die Patenterteilung: **11.11.2026**
(21) Anmeldenummer: 23188359.6
(22) Anmeldetag: 28.07.2023
(51) Int. Cl.: F16L 5/10

(54) **VORRICHTUNG ZUR DURCHFÜHRUNG VON MINDESTENS EINER LEITUNG DURCH EINE ÖFFNUNG IN EINER WAND**
DEVICE FOR PASSING AT LEAST ONE LINE THROUGH AN OPENING IN A WALL
DISPOSITIF POUR FAIRE PASSER AU MOINS UN CONDUIT À TRAVERS UNE OUVERTURE DANS UN MUR

(43) Veröffentlichungstag der Anmeldung: 29.01.2025
(73) Patentinhaber: DOYMA GmbH & Co, 28876 Oyten (DE)
(72) Erfinder: Straube, Florian, 28359 Bremen (DE); Müller, Philipp, 28832 Achim (DE)
(74) Vertreter: Eisenführ Speiser

(56) Entgegenhaltungen:
- DE-A1- 102011 078 561
- DE-A1- 4 200 866
- DE-U1- 8 714 835
- DE-U1- 8 915 213

## Beschreibung

Die Erfindung betrifft eine Vorrichtung zur Durchführung von mindestens einer Leitung durch eine Öffnung in einer Wand und/oder Geschossdecke, mit wenigsten einem Rohrelement zum Aufnehmen der durch die Öffnung zu führenden Leitung, und wenigstens einem Abschlusselement, welches unmittelbar oder mittelbar an einer Wandfläche der Wand anlegbar ist, wobei das Abschlusselement einen nach innen in Richtung auf das Rohr weisenden Kopplungsabschnitt aufweist, wobei der Kopplungsabschnitt zum kraft- und/oder formschlüssigen Koppeln mit der äußeren Oberfläche des Rohrelements in An- oder Eingriff bringbar ist. Des Weiteren betrifft die Erfindung ein Verfahren zum Installieren einer Vorrichtung zum Durchführen von zumindest einer Leitung durch eine Öffnung in einer Wand.

Durchführungsvorrichtungen der vorbezeichneten Gattung, auch als Hauseinführung oder Wanddurchführungen bekannt, werden verwendet, um Leitungen, wie Medien- oder Versorgungsleitungen, gegenüber einem Durchbruch bzw. einer Öffnung in einer Wand, insbesondere einer etwa senkrecht verlaufenden Wand, eines Gebäudes abzudichten. Unter einer Leitung werden erfindungsgemäß sowohl elektrische Leitungen als auch medienführende Leitungen, wie etwa Gas- oder Wasserleitungen bzw. Kältemittelleitungen von Wärmepumpensystemen oder Klimaanlagen, verstanden. Eine Leitung kann einteilig sein oder sich aus ein oder mehreren Leitungsabschnitten zusammensetzen. Eine Leitung wird üblicherweise in horizontaler Richtung von außen in das Gebäude durch eine Gebäudewand oder in vertikaler Richtung durch eine Bodenplatte oder Geschossdecke hindurchgeführt. Die Vorrichtung wird üblicherweise innerhalb des Durchbruchs oder der Öffnung in der Wand bzw. im Wandabschnitt angeordnet und dichtet gegenüber der Öffnung der Wand wie auch gegenüber der hindurchgeführten Leitung ab.

Allgemein bekannt sind solche Durchführungsvorrichtungen für Leitungen, die durch ein sich durch die Öffnung im Wandabschnitt erstreckendes Rohrelement geführt sind. An den aus dem Wandabschnitt herausstehenden Enden des Rohrelements ist üblicherweise jeweils ein Abschlusselement angeordnet, das auf jeweils einer Seite der Wand mit einer Wandfläche in Anlage gebracht wird. Zwischen den auf einander gegenüberliegenden Seiten der Wand angeordneten Abschlusselementen wird üblicherweise eine von Hand aufbringbare Spannkraft erzeugt. Darüber wird die Anlage der Abschlusselemente an den Wandflächen, insbesondere um die Öffnung herum, bewirkt.

Aus DE 10 2013 224 027 B4 ist bspw. eine solche Vorrichtung zum Durchführen von Leitungen durch eine Öffnung in einer Wand bekannt. Die Abschlusselemente weisen jeweils eine Aufnahme zum Zusammenwirken mit dem Rohrelement auf, mittels der die Abschlusselemente in einem vorbestimmten Abstand entlang des Rohrelements zueinander fixiert werden. Zum Aufbringen einer Spannkraft zwischen den zu beiden Seiten der Wand angeordneten Abschlusselemente ist zwischen einem Abschlusselement und einer zugeordneten Wandfläche ein Expansionskörper angeordnet, der im Volumen vergrößert werden kann und die notwendige Anpresskraft erzeugt.

DE 42 00 866 A1 betrifft eine Mauerdurchführung aus einem rohrförmigen Verbindungsteil mit einem Rechts- und einem Linksgewinde, auf die zu beiden Seiten einer Mauer jeweils ringförmige Flansche aufdrehbar sind. Die Flansche weisen mit den Gewinden am Verbindungsteil zusammenwirkende Gewinde auf, wobei bei einer Drehung des Verbindungsteils um seine Längsachse die Flansche aufeinander zu oder voneinander weg bewegbar sind. Die Flansche sind elastisch verformbar ausgeführt, sodass die Flansche mit Drehen des Verbindungsteils an die Wandflächen der Mauer angepresst werden.

DE 87 14 835 U1 bezieht sich auf eine Hauseinführungskombination zum Einführen einer Gasleitung durch eine Mauer in ein Gebäude. Die Hauseinführungskombination umfasst ein Gewinde-Wellrohr, an dessen entgegengesetzten Enden zu beiden Seiten der Mauer Stützplatten vorgesehen sind. Die Stützplatten werden auf das Wellrohr aufgeschraubt und gegen die beiden Flächen der Mauer verspannt.

DE 89 15 213 U1 zeigt eine Mauerdurchführung für Rohre, Kabel oder Leitungen. Die Mauerdurchführung umfasst ein spiralförmiges Wellrohr, auf dem zu beiden Seiten des Mauerwerks Deckelteile angeordnet sind. Die Deckelteile sind entlang des Wellrohrs verschieblich angeordnet. Die Deckelteile weisen Rohrstücke auf, die innenseitig in Richtung des Wellrohrs abstehende Rastfüße haben. Die Rastfüße stützen sich jeweils in den Wellungen des Wellrohrs rastend ab.

Ausgehend vom vorliegenden Stand der Technik lag der Erfindung die Aufgabe zugrunde, eine Vorrichtung zum Durchführen einer Leitung durch eine Öffnung in einer Wand aufzuzeigen, mittels der neben einer sicheren Abdichtung eine vereinfachte Montage, insbesondere ein vereinfachtes Verspannen der Vorrichtung mit seinem Abschlusselement gegenüber der Wand erreicht ist. Zumindest soll zu den bisher bekannten Lösungen eine alternative Möglichkeit für die Ausgestaltung einer Durchführungsvorrichtung vorgeschlagen werden.

Die Erfindung löst die ihr zugrundeliegende Aufgabe bei einer Vorrichtung zur Durchführung von mindestens einer Leitung durch eine Öffnung in einer Wand mit den Merkmalen nach Anspruch 1. Erfindungsgemäß ist vorgesehen, dass das Rohrelement wenigsten axial in Längsrichtung des Rohrelements elastisch verformbar ist, derart, dass das Abschlusselement aufrgund einer elastischen Verformung des Rohrelements im montierten Zustand an die Wand angepresst wird.

Die Erfindung verfolgt vorliegend den Ansatz, dass die zum Fixieren und ggfs. Abdichten der Durchführungsvorrichtung gegenüber der Wand benötige Spannkraft mit Hilfe einer elastischen Verformung des Rohrelements selbst erzeugt wird. Beim elastischen Verspannen der Vorrichtung wird bevorzugt das Rohrelement wenigstens in axialer Richtung so ausgelenkt, dass nach dem Montieren der Durchführungsvorrichtung in der Öffnung, resultierend aus der elastischen Verformung von Rohrelement, in axialer Richtung wirkende Rückstellkräfte eine Kraft erzeugen, welche das auf zumindest einer Seite der Wand angeordnete Abschlusselement mit einer vorbestimmten Anpresskraft gegen die Wandfläche drückt. Dem Abschlusselement ist bevorzugt am gegenüberliegenden Ende des Rohrelements ein Widerlager zugeordnet, das an der entgegengesetzten Wandfläche oder entlang eines Abschnitts in der Öffnung angreift bzw. fixiert ist. Darüber ist ein vorteilhaftes Fixieren der Vorrichtung innerhalb der Öffnung der Wand an zwei voneinander beabstandeten Punkten und ggfs. eine dadurch umzusetzende Abdichtung gegenüber zumindest einer Wandfläche der Wand erreicht. Vorzugsweise erfolgt das endgültige Koppeln des Abschlusselements mit der äußeren Oberfläche des Rohrelements, nachdem das Rohrelement in Längsrichtung elastisch verformt, insbesondere gelängt, wurde(n). Der Kopplungsabschnitt am Abschlusselement greift insbesondere formschlüssig in entsprechende entlang des Rohrelements ausgebildete Aufnahmen ein. In einer alternativen Ausgestaltung wird der Kopplungsabschnitt kraftschlüssig mit der äußeren Oberfläche des Rohrelements, über bspw. ein mit dem Kopplungsabschnitt zusammenwirkendes Spannmittel, fixiert. Als Widerlager für das mit der Wand in Anlage bringbare Abschlusselement kann am gegenüberliegenden Ende des Rohrelements eine mit der anderen Wandfläche der Wand zusammenwirkende, mehrere Stützstreben aufweisende Halterung angeordnet sein. Vorzugsweise ist auf den voneinander abgewandten Wandflächen der Wand jeweils ein solches Abschlusselement angeordnet, welche unmittelbar oder mittelbar an die Wand anlegbar sind.

Eine bevorzugte Weiterbildung der Erfindung sieht vor, dass der Kopplungsabschnitt mindestens ein Kopplungselement aufweist, das formschlüssig mit der äußeren Oberfläche des Rohres in Eingriff bringbar ist. Mit dem Vorsehen eines Kopplungselements für das formschlüssige Eingreifen in die Oberfläche des Rohrelements ist eine konstruktiv einfache Möglichkeit für das Herstellen einer Verbindung zur Kraftübertragung zwischen dem Rohrelement und mindestens einem entlang des Rohrelements in Position zu haltenden Abschlusselements bewirkt. Mit Hilfe des Kopplungselements ist an der Oberfläche des Rohrelements bevorzugt eine Verrastfunktion umgesetzt, worüber das Positionieren des Abschlusselementes vorzugsweise in verschiedenen Stellungen entlang des Rohrelements möglich ist.

Insbesondere ist der Kopplungsabschnitt derart ausgebildet bzw. dazu eingerichtet, dass das Abschlusselement in einer Bewegungsrichtung entlang des Rohrelements nahezu widerstandsfrei aufgeschoben werden kann, aber in die entgegengesetzte Richtung ist mittels des Kopplungsabschnitts ein Abstützen/Arretieren des Abschlusselements am Rohrelement umgesetzt. Vorzugsweise lassen sich die Abschlusselemente entlang des Rohrelements in Richtung der Wandfläche verschieben, wohingegen in die entgegengesetzte Richtung eine selbsthemmende Arretierung umgesetzt ist. Damit ist das Montieren an einer solch erfindungsgemäß ausgebildeten Durchführungsvorrichtung im Bereich einer Öffnung einer Wandung weiter vereinfacht.

In einer bevorzugten Weiterbildung der Vorrichtung ist vorgesehen, dass das Rohrelement an seiner äußeren Oberfläche Vertiefungen und/oder Vorsprünge aufweist, insbesondere als Wellrohr ausgebildet ist, und der Kopplungsabschnitt so ausgebildet ist, dass der Kopplungsabschnitt mit mindestens einer Vertiefung und/oder Vorsprung formschlüssig korrespondiert. Die Vertiefungen und/oder Vorsprünge an der Oberfläche des Rohrelements bilden Strukturteile am Rohrelement aus, mit denen der Kopplungsabschnitt des Abschlusselements für eine Positionierung des Abschlusselements entlang des Rohrelements zusammenwirkt. In einer möglichen Ausgestaltung sind die Vertiefungen und/oder Vorsprünge an dem Rohrelement in vordefinierten Abständen entlang des Rohrelements ausgebildet. Vorzugsweise ist das Rohrelement als Wellrohr ausgebildet, so dass an der Oberfläche in Längsrichtung abwechselnd Vorsprünge und Vertiefungen ausgebildet sind. Damit ist das Koppeln des Abschlusselementes mit dem Rohrelement entlang dessen Oberfläche in relativ geringen Abständen zueinander möglich, ohne dass Vorsprünge und/oder Vertiefungen gezielt an der Oberfläche des Rohrelements ausgebildet werden müssen. Zudem birgt der Einsatz eines Wellrohres als Rohrelement den Vorteil, dass durch die konstruktive Ausgestaltung die gewünschte elastische Verformbarkeit für das Auslängen des Rohrelements in Längsrichtung gegeben ist.

In einer möglichen Ausgestaltung ist das Rohrelement derart flexibel ausgeführt und dazu eingerichtet, in einem Winkel im Bereich von 0° bis 70° zur Wandfläche der Wand oder Geschossdecke verlaufend verlegt zu werden. Das vorzugsweise als Wellrohr ausgebildete Rohrelement kann durch eine Öffnung in einer Wand hindurchgeführt werden, die in einem Winkel β geneigt zu der Wandfläche der Wand verläuft. In einer alternativen Ausgestaltung kann anstelle eines Wellrohres auch ein flexibler Schlauch verwendet werden, der entlang seiner äußeren Oberfläche in seiner Längsrichtung in vorbestimmten Abständen axial zueinander beabstandete Vorsprünge aufweist, mit denen der Kopplungsabschnitt am Abschlusselement zusammenwirken kann.

Vorzugsweise ist das mindestens eine Kopplungselement als elastisch verformbarer Rast-Haken ausgebildet, der mit mindestens einer Vertiefung am Rohrelement verrastbar ist. Durch die elastische Verformbarkeit des Rast-Hakens ist bewirkt, dass mit dem Bewegen des Abschlusselements entlang des Rohrelements der Rast-Haken gegenüber einem Vorsprung an der Oberfläche des Rohrelements bevorzugt in radialer Richtung ausweichen kann. Dadurch ist gewährleistet, dass das Abschlusselement in mindestens eine Richtung längs des Rohrelements bewegt werden kann. Gleichzeitig ist durch die elastische Verformbarkeit des Kopplungselements bewirkt, dass dieses nach dem Passieren des Vorsprungs wieder selbsttätig mit der dahinterliegenden äußeren Oberfläche des Rohrelements in Eingriff gelangt. Vorzugsweise weist der Rast-Haken einen Endabschnitt auf, der im montierten Zustand der Vorrichtung im Wesentlichen radial nach innen in eine der Vertiefungen am Rohrelement eingreift bzw. im Falle von an der äußeren Oberfläche des Rohrelements nach außen vorstehenden Vorsprüngen diese für eine formschlüssige Verbindung in axialer Richtung hintergreift.

Gemäß einer bevorzugten Weiterbildung erstreckt sich das Kopplungselement außenseitig am Abschlusselement in einem spitzen Winkel bezogen auf eine Längsachse des Rohrelements weg. Damit ist bewirkt, dass beim Montieren der Vorrichtung das oben beschriebene Aufschieben des Abschlusselements auf das Rohrelement und damit das in Anlage bringen des Abschlusselementes mit einer der Wandflächen vereinfacht ist. Das Kopplungselement, insbesondere ein elastisch verformbar ausgebildete Rast-Haken, ist am Kopplungsabschnitt zungenartig ausgebildet und verläuft bezogen auf die Längsachse des Rohrelements in einem spitzen Winkel, bevorzugt kleiner 45°. Durch seinen Verlauf am Kopplungsabschnitt im spitzen Winkel zur Längsachse des Rohrelements ist mittels des Kopplungselements zudem die in die entgegengesetzte Bewegungsrichtung zum Rohrelement beschriebene, erfindungsgemäße Arretier-/Abstützfunktion und damit eine sichere Kraftübertragung vom Abschlusselement auf das Rohrelement erreicht.

In einer bevorzugten Ausgestaltung der Vorrichtung ist eine Vielzahl von Kopplungselementen über den Umfang des Rohrelements verteilt an dem Kopplungsabschnitt angeordnet, wobei vorzugsweise Kopplungselemente unterschiedlicher Längen am Kopplungsabschnitt vorgesehen sind. Durch das Vorsehen einer Vielzahl bevorzugt als Rast-Haken ausgebildeten Kopplungselemente, wobei jeweils mehrere Kopplungselemente gleichzeitig mit mindestens einem der Vorsprünge und/oder Vertiefungen an der äußeren Oberfläche des Rohrelementes korrespondieren, ist eine verbesserte Verrastfunktion und eine gleichmäßige Kraftverteilung über den Umfang des Rohrelements für ein sicheres Arretieren des Abschlusselements relativ zum Rohrelement bewirkt. In einer möglichen Ausführung sind die Kopplungselemente gleichmäßig über den Umfang des Rohrelements verteilt angeordnet.

In einer möglichen Ausgestaltung weisen die in Umfangsrichtung des Rohrelements jeweils benachbart zueinander ausgebildeten Kopplungselemente unterschiedliche Längen auf. Bevorzugt greifen die Kopplungselemente in unterschiedliche Vertiefungen ein bzw. wirken mit unterschiedlichen Vorsprüngen zusammen. Vorzugsweise greifen die Endabschnitte der insbesondere als zungenartig ausgebildete Rast-Haken, bezogen in Längsrichtung des Rohrelements, an verschiedenen axialen Positionen entlang des Rohrelements ein.

Eine Weiterbildung der erfindungsgemäßen Vorrichtung sieht vor, dass mindestens zwei Gruppen von Kopplungselementen mit unterschiedlichen Längen ausgebildet sind. In einer möglichen Ausführung sind die Längen der verschiedenen Gruppen von Kopplungselementen derart gewählt, dass jeweils immer nur eine der Gruppen von Kopplungselementen mit den Vertiefungen und/oder Vorsprüngen am Rohrelement zusammenwirkt bzw. in diese eingreift. Wirken zum Beispiel die Kopplungselemente einer ersten Gruppe mit den Vertiefungen oder Vorsprüngen an der äußeren Oberfläche des Rohrelementes zusammen, sind die Kopplungselemente der zweiten Gruppe zwischen zwei Vertiefungen an der Oberfläche des Rohrelements oder im Abstand zu einem an der Oberfläche des Rohrelements ausgebildeten Vorsprungs angeordnet. Damit ist eine feiner unterteilte Abstütz-/Verrastfunktion und eine genauere Positionierung des Abschlusselementes, der bevorzugt zwei zum Einsatz kommenden Abschlusselemente, entlang des Rohrelementes möglich. In einer alternativen Ausgestaltung können alternativ oder optional mehrere Kopplungselemente axial hintereinander am Kopplungsabschnitt angeordnet sein, wobei diese am Kopplungsabschnitt gleich oder auch unterschiedlich lang sein können.

Gemäß einer bevorzugten Ausführungsform der vorliegenden Erfindung, die zugleich auch einen separaten Aspekt der Erfindung abbildet, ist eine wenigstens teilweise elastisch verformbare Manschette mit wenigstens zwei axial aneinander angrenzenden Dichtabschnitten mit gleich großen oder unterschiedlich großen Querschnitten vorgesehen, welche einerseits mit einem der Abschlusselemente und andererseits mit der äußeren Oberfläche des Rohrelements, vorzugsweise abdichtend, in Anlage bringbar ist. Die an der erfindungsgemäßen Vorrichtung zum Einsatz kommende Manschette dient insbesondere zur Abdichtung zwischen dem Übergang vom Abschlusselement auf das Rohrelement. Damit ist dem Eindringen von Feuchtigkeit über den Verbindungsbereich zwischen Rohrelement und Kopplungsabschnitt und damit in den wandseitigen Bereich des Abschlusselements der Vorrichtung und in die Öffnung im Wandabschnitt und in das Innere des Wandabschnitts entgegengewirkt. Vorzugsweise ist mittels der Manschette, welche an zumindest einer Seite der Vorrichtung als Abdichtung zwischen dem Rohrelement und dem Abschlusselement verwendet wird, Fluiddichtheit nach DIN 18533 hergestellt, die den Durchtritt von Fluid, wie Wasser, behindert. Die Dichtabschnitte der Manschette sind unmittelbar zueinander benachbart ausgebildet, wobei die Dichtabschnitte gleich oder unterschiedlich große Querschnitte haben. Bevorzugt ist mindestens einer der Dichtabschnitte an der Manschette auf die äußeren Abmessungen des Kopplungsabschnitts am Abschlusselement angepasst und der mindestens eine weitere Dichtabschnitt ist an die äußeren Abmessungen des demgegenüber abzudichtenden Rohrelements angepasst.

Vorzugsweise ist die Manschette aus einem elastisch verformbaren Material, wie bspw. Silikon, EPDM, Gummi, wie z.B. NBR, Zellkautschuk, oder anderen geeigneten Elastomerdichtungsmaterialien, ausgebildet. Vorzugsweise weist die Manschette mindestens zwei, vorzugsweise drei oder mehr zylinderförmige Abschnitte mit unterschiedlichen Durchmessern auf. Die zylinderförmigen Abschnitte an der Manschette weisen, bezogen auf die entsprechend damit korrespondierenden zylinderförmigen Abschnitte am Rohrelement und/oder dem Abschlusselement, insbesondere dessen Kopplungsabschnitt, ein entsprechendes Untermaß auf. Die zylinderförmigen Abschnitte müssen, um mit den korrespondierenden Abschnitten am Rohrelement und/oder dem Abschlusselement in Kontakt gebracht zu werden, im Durchmesser aufgeweitet werden. Damit ist das kraftschlüssige in Anlagebringen und zudem die Abdichtung zwischen den aufeinanderliegenden Anlageflächen von Manschette und Rohrelement und/oder Abschlusselement erreicht.

Gemäß einer bevorzugten Weiterbildung sind an der inneren Oberfläche der Manschette mehrere Vorsprünge radial nach innen abstehend ausgebildet, welche mit der Oberfläche des Rohrelements in kraftschlüssigen und/oder bevorzugt formschlüssigen Eingriff bringbar sind. Mithilfe der radial nach innen vorstehenden Vorsprünge, welche bevorzugt umlaufend an der Innenseite der Manschette ausgebildet sind, ist, wenn die Vorsprünge in Vertiefungen am Rohrelement und/oder dem Kopplungsabschnitt des Abschlusselements eingreifen, eine sichere Positionierung der Manschette an der erfindungsgemäßen Vorrichtung erreicht. Einem unbeabsichtigten Lösen der Manschette und Verschieben der Manschette entlang des Rohrelements und/oder des Abschlusselements, ist damit vorteilhaft entgegengewirkt. Zudem kann mithilfe der innenseitig vorstehenden Vorsprünge die Abdichtwirkung zwischen der Manschette und den damit korrespondierenden Bauteilen (Rohrelement, Abschlusselement) erhöht werden.

Vorzugsweise weist jeder zylinderförmige Abschnitt mindestens einen solchen, innenseitig abstehenden Vorsprung auf, der an den zylinderförmigen Abschnitten in Umfangsrichtung nur partiell oder auch umlaufend ausgebildet sein kann. Die Vorsprünge sind als Materialstege an der Innenseite der zylinderförmigen Abschnitte der Manschette ausgebildet, wobei ein bevorzugt umlaufender Materialsteg mit einer Vertiefung an der äußeren Oberfläche des Rohrelements bzw. mit einer entsprechenden Vertiefung an dem Kopplungsabschnitt des Abschlusselementes zusammenwirkt.

Gemäß einer bevorzugten Ausführungsform der Vorrichtung weist die Manschette und/oder das Rohrelement einen innenseitigen Aufnahmeabschnitt für einen darin einsetzbaren Dichtstopfen auf, der eine Öffnung zum Hindurchführen der Leitung hat und dazu eingerichtet ist, gegenüber der Manschette bzw. dem Rohrelement und der hindurchgeführten Leitung abzudichten. Mithilfe des insbesondere in den Aufnahmeabschnitt einsteckbaren Dichtstopfens ist einerseits eine einfache Abdichtung gegenüber dem Rohrelement oder der das Rohrelement endseitig überragenden Manschette und andererseits eine einfache Abdichtung gegenüber der durch das Rohrelement hindurchgeführten Leitung möglich. Der Dichtstopfen weist vorzugsweise einen zylindrischen Grundkörper auf, der mit seinem Außendurchmesser insbesondere an die Abmessung des durch die Öffnung in der Wand hindurchgeführten Rohrelements und/oder an die das Rohrelement endseitig überragende Manschette angepasst ist. An seiner Innenseite weist der zylindrische Grundkörper bevorzugt ein mit der durch das Rohrelement hindurchzuführenden Leitung zusammenwirkendes Dichtungsteil auf.

Eine Weiterbildung der erfindungsgemäßen Manschette sieht vor, dass diese an einem ihrer Dichtabschnitte einen Aufnahmeabschnitt für ein damit in Kontakt bringbares Hülsrohr und/oder eine die Manschette zumindest bezogen auf das Rohrelement arretierendes Spannmittel aufweist. Mindestens einer der Dichtabschnitte ist zum Aufnehmen und damit als Adapter für ein bevorzugt mit der Manschette abdichtend verbindbares Hülsrohr eingerichtet. Der Aufnahmeabschnitt ist in einer Ausführung am vom Abschlusselement abgewandten Ende der Manschette angeordnet. Der Aufnahmeabschnitt kann an der außen- wie auch innenseitigen Umfangsfläche des Dichtabschnitts ausgebildet sein. An wenigstens einem der Dichtabschnitte, das kann derselbe Dichtabschnitt oder auch ein anderer Dichtabschnitt sein, ist ein Aufnahmeabschnitt für ein die Manschette arretierendes Spannmittel vorgesehen. Mittels des Spannmittels, welches als Spannschelle ausgeführt sein kann, wird die Manschette an der Außenseite des Rohrelements und/oder an der äußeren Umfangsfläche des Kopplungsabschnitts des Abschlusselements befestigt. Der Aufnahmeabschnitt ist in einer Ausführungsform zylindrisch ausgeführt.

Gemäß einer bevorzugten Weiterbildung weist mindestens einer der Dichtabschnitte eine äußere Umfangsfläche auf, die sich in axialer Richtung im Querschnitt, insbesondere konisch, aufweitet. An dem sich außenseitig im Querschnitt aufweitenden Dichtabschnitt kann beispielsweise unter Verwendung eines außenseitig auf den Dichtabschnitt aufzuschiebenden Hülsrohres ein vorteilhaftes Verspannen des Dichtabschnitts gegenüber dem innenseitig mit dem Dichtabschnitt in Anlage stehenden Rohrelement bzw. einem innenseitig mit dem Dichtabschnitt in Anlage stehenden Dichtstopfen bewirkt werden, welcher als Abdichtung für eine durch das Rohrelement hindurchgeführte Leitung verwendet wird. Vorzugsweise weist der jeweilige Dichtabschnitt eine sich in axialer Richtung konisch aufweitende äußere Umfangsfläche auf, wodurch ein vereinfachtes und gleichmäßiges in Anlagebringen mit einem bevorzugt zylindrisch ausgebildeten Hülsrohr bewirkt ist.

In einer bevorzugten Weiterbildung der erfindungsgemäßen Vorrichtung weist die Manschette einen an den im Querschnitt kleinsten Dichtabschnitt angrenzenden Verlängerungsabschnitt auf, der mittels einer Solltrennstelle mit dem Dichtabschnitt verbunden und zum, insbesondere außenseitigen, Aufnehmen eines Hülsrohres eingerichtet ist. Mithilfe des Verlängerungsabschnitts, der zu den Dichtabschnitten der Manschette in bestimmten Grenzen beweglich ist, ist es möglich, ein Hüls- oder Schutzrohr mit der Manschette auf insbesondere der Gebäudeaußenseite zu koppeln, das ggfs. in einem Winkel geneigt zur Längsachse der erfindungsgemäßen Durchführungsvorrichtung verläuft. Durch den Verlängerungsabschnitt können insbesondere Abweichungen in der Ausrichtung der Öffnung im Wandabschnitt und einem in einem abweichenden Winkel auf die Öffnung zulaufenden Hülsrohr auf einfache Weise ausgeglichen werden.

In einer möglichen Ausgestaltung ist der Verlängerungsabschnitt vorzugsweise mit dem im Querschnitt kleinsten Dichtabschnitt über eine Solltrennstelle verbunden. Der Verlängerungsabschnitt kann somit im Bedarfsfall einfach von der Manschette abgetrennt werden. Der Verlängerungsabschnitt ist in einer möglichen Ausführung insbesondere durch das damit zu koppelnde, insbesondere außenseitig aufschiebbare Hülsrohr in radialer Richtung verformbar ausgebildet, was das Abdichten und zudem die axiale Ausrichtung von Hülsrohr und Manschette zueinander vereinfacht. In einer Ausführung, in der der Verlängerungsabschnitts zum innenseitigen Aufnehmen des Hülsrohres ausgeführt ist, die äußere Umfangsfläche des Verlängerungsabschnitts dazu eingerichtet, mit einem Spannmittel zum Verspannen des Verlängerungsabschnitts gegenüber dem darin aufgenommenen Hülsrohr zusammenzuwirken.

In einer bevorzugten Ausführungsform der Vorrichtung weist der Dichtstopfen mindestens ein radial nach innen und/oder außen abstehendes Dichtungsteil auf, vorzugsweise eine Dichtlippe. Mithilfe der Dichtungsteile an der Außen- wie auch der Innenseite des Dichtstopfens, insbesondere dessen Grundkörper, kann eine vorteilhaft einfache Abdichtwirkung erzielt werden. Der innere freie Querschnitt des Dichtstopfens ist an den mittels des Rohrelements größtmöglich hindurchzuführenden Leitungsquerschnitt angepasst. Dass sich nach innen abstehende Dichtungsteil, ist derart elastisch ausgebildet, dass eine sichere Abdichtung gegenüber dem kleinsten wie auch gegen dem größten durch das Rohrelement hindurchführbaren Leitungsquerschnitt möglich ist.

In einer weiteren Ausgestaltung der Vorrichtung ist an mindestens einem der Abschlusselemente, das bevorzugt einen zumindest sich außerhalb der Öffnung erstreckenden Flanschkörper aufweist, wenigstens ein Dichtelement angeordnet, das in montiertem Zustand vorzugsweise zwischen dem Flanschkörper des Abschlusselements und der Wand angeordnet und verspannt ist, und/oder eine Zentrierhilfe für zumindest das radiale Ausrichten des Abschlusselements zur Öffnung vorgesehen. Vorzugsweise weist zumindest das auf der außenseitigen Wandfläche der Wand angeordnete Abschlusselement ein Dichtelement auf, das bevorzugt ringförmig entlang der Peripherie der Verschlusseinheit verläuft. Das Dichtelement ist dabei so an dem Abschlusselement angeordnet bzw. daran angeformt, dass das Dichtelement mit zumindest der die Öffnung in radialer Richtung umgebenden Wandfläche in Kontakt bringbar ist. In einer möglichen Ausführung ist das Dichtelement am Abschlusselement dazu eingerichtet, auch zumindest teilweise in die Öffnung der Wand vorzustehen, wodurch die Abdichtwirkung an dem mit dem Dichtelement ausgerüsteten Abschlusselement gegenüber der Wand weiter verbessert ist.

Alternativ oder optional ist an wenigstens einem, vorzugsweise beiden Abschlusselementen eine Zentrierhilfe vorgesehen, mittels der die Abschlusselemente und damit die Vorrichtung in radialer Richtung innerhalb der Öffnung ausgerichtet wird. Neben einem bevorzugt mittigen Ausrichten in der Öffnung, wodurch das Rohrelement einen bevorzugt gleichmäßigen Abstand zu der die Öffnung ausbildenden Laibung einnimmt, ist zudem auch das Sicherstellen der Abdichtfunktion mittels des insbesondere radial außen um die Zentrierhilfe angeordnete Dichtelement vereinfacht. Vorzugsweise weist die Zentrierhilfe mehrere kreisförmig um den Mittenbereich des oder der Abschlusselemente herum angeordnete, innenseitig vorstehende Zentrierstege auf. Mittels der Zentrierstege, welche mit in Anlagebringen des Abschlusselements mit der Wand in die Öffnung in der Wand vorstehen, wird der radiale Versatz der Vorrichtung innerhalb der Öffnung begrenzt. In Verbindung mit einem in die Öffnung einzubringenden Wärmedämmmaterial kann durch das mittige Anordnen der Vorrichtung innerhalb der Öffnung eine nahezu gleichmäßige Isolierwirkung um die hindurchzuführende Leitung herum erzeugt werden.

Gemäß einer bevorzugten Ausgestaltung weist mindestens eines der Abschlusselemente eine Einfüllöffnung und/oder Entlüftung für ein in die Öffnung einzubringendes Dicht- und/oder Wärmedämmmaterial auf. Mit dem Vorsehen von mindestens einer Einfüllöffnung an einem der Abschlusselemente ist das Einbringen eines fließfähigen Wärmedämmmaterial in den nach der Montage der Vorrichtung innerhalb der Öffnung ausgebildeten, bevorzugt beiderseits durch die Abschlusselemente begrenzten Aufnahmeraum auf einfache Weise möglich. Vorzugsweise kann mit der Einfüllöffnung eine Einfüllhilfe, z.B. in Form eines Einfüllschlauches, fluidleitend verbunden sein, welche das Einbringen eines fließfähigen Wärmedämmmaterials in den Aufnahmeraum erleichtert. Als Dicht- und/oder Wärmedämmmaterial kann über die Einfüllöffnung z.B. ein Zwei-Komponenten-Schaum eingegeben werden.

In einer möglichen Ausführung der Erfindung weist das Abschlusselement zusätzlich zu seinem wenigstens einen Kopplungsabschnitt für das Rohrelement wenigstens einen Durchgang für eine medienführende Leitung auf. Neben einer mittels des Rohrelements durch die Öffnung geführten Leitung kann zusätzlich auch eine medienführende Leitung über separat am Abschlusselement ausgebildete, bevorzugt zylindrische Durchgänge durch die Öffnung in der Wand hindurchgeführt werden.

Gemäß einer bevorzugten Ausgestaltung, welche ein kraftschlüssiges Koppeln des Kopplungsabschnitts mit der äußeren Oberfläche des Rohrelements vorsieht, weist der Kopplungsabschnitt mindestens ein im Querschnitt veränderbares Spannteil auf, das mit einem außenseitig am Spannteil in Wirkverbindung bringbaren Spannmittel zum kraftschlüssigen in Angriffbringen mit der äußeren Oberfläche des Rohrelements eingerichtet ist. Anstelle eines Formschlusses mittels am Kopplungsabschnitt abstehender in die Oberfläche des Rohrelements bevorzugt formschlüssig eingreifender Kopplungselemente, kann das Spannteil ebenfalls mehrere in Umfangsrichtung um das Rohrelement herum angeordnete Kopplungselemente aufweisen, die jedoch "nur" in Anlage mit der äußeren Oberfläche des Rohrelements gebracht werden. Mithilfe eines separat mit dem Spannteil am Kopplungsabschnitt in Wirkverbindung bringbaren Spannmittels, welches bspw. als Spannschelle ausgebildet sein kann, wird der freie Querschnitt zwischen den bevorzugt mehreren Kopplungselementen am Spannteil so verringert, dass das Spannteil kraftschlüssig an der Außenseite des Rohrelements anliegt. Die von dem Spannmittel erzeugte Spannkraft reicht dabei aus, den Kopplungsabschnitt in axialer Richtung entlang des Rohrelementes zu arretieren.

Die Erfindung betrifft gemäß einem weiteren Aspekt ein Verfahren nach Anspruch 19 zum Installieren einer Vorrichtung zum Durchführen von zumindest einer Leitung durch eine Öffnung in einer Wand.

Das erfindungsgemäße Verfahren löst die eingangs beschriebene Aufgabe, wobei die Vorrichtung nach einer der vorstehend beschriebenen bevorzugten Ausführungsformen ausgebildet ist, mit den Schritten:
- Bereitstellen oder Herstellen einer Öffnung in einer Gebäude-Wand;
- Koppeln eines ersten Abschlusselements mit wenigstens einem Rohrelement;
- Einsetzen des mit einem Abschlusselement gekoppelten Rohrelements in die Öffnung, wobei das mit dem Rohrelement verbundene Abschlusselement vorzugsweise mit einer innen- oder außenseitigen Wandfläche der Wand in Anlage gebracht wird,
- Koppeln eines zweiten Abschlusselements mit einem mit dem zum ersten Abschlusselement entgegengesetzten Ende des Rohrelements, und
- Auslenken des Rohrelements in axialer Richtung um ein vorbestimmtes (Längen-)Maß mittels einer Kraft und in Anlagebringen des ersten und zweiten Abschlusselements mit den Wandflächen der Wand, so dass mittels der am Rohrelement wirkenden Rückstellkräfte ein Verspannen der Abschlusselemente gegen die Wand erzeugt wird, wobei vorzugsweise wenigstens ein zwischen dem Abschlusselement und der Wand angeordnetes Dichtelement verspannt wird.

Mithilfe der oben angeführten Verfahrensschritte ist der erfindungsgemäße Ansatz verfolgt mit wenigen übersichtlichen und einfach durchzuführenden Handgriffen eine Vorrichtung zum Durchführen einer Leitung in einer Öffnung eines Wandabschnitts eines Gebäudes zu installieren. Ein solch erfindungsgemäßes vereinfachtes Verfahren kann somit auch durch jeden beliebigen Fachhandwerker, bspw. des Gewerks Rohbau, zuverlässig ausgeführt werden, da Fehler in der Montage vermieden und nach der Montage der Durchführungsvorrichtung ein jeweils zufriedenstellendes Endprodukt geschaffen ist.

In einem Wandabschnitt eines Gebäudes, in dem eine solche, erfindungsgemäße Vorrichtung installiert werden soll, wird eine Öffnung in einem Wandabschnitt erzeugt. Das kann in der Bauabfolge auf unterschiedlichem Wege erfolgen. Entweder wird die Wand zunächst vollständig hergestellt und anschließend zu einem späteren Zeitpunkt die Öffnung in Form eines Durchbruchs erzeugt, oder die Wand des Gebäudes wird mit der vorzusehenden Öffnung für die Durchführungsvorrichtung in einem Arbeitsgang erstellt.

In einem nächsten Schritt wird ein erstes Abschlusselement mit einem sich durch die Öffnung hindurcherstreckenden Rohrelement gekoppelt, welches zum Aufnehmen der durch die Öffnung hindurchzuführenden Leitung eingerichtet ist. Das Abschlusselement wird nur insoweit auf das Rohrelement aufgeschoben, dass das Rohrelement um ein vorbestimmtes Mindestmaß aus dem Kopplungsabschnitt des Abschlusselementes vorsteht, die restliche Länge des Rohrelements jedoch genügt, dass sich das entgegengesetzte Ende des Rohrelements durch die Wand bis auf die gegenüberliegende Seite erstrecken kann. Das Abschlusselement geht vorzugsweise eine Formschlussverbindung mit der äußeren Oberfläche des Rohrelements ein.

Anschließend wird das mit dem Abschlusselement gekoppelte oder ausgerüstete Rohrelement in die Öffnung eingesetzt, wobei das mit dem Rohrelement verbundene Abschlusselement vorzugsweise mit einer innen- oder außenseitigen Wandfläche in Anlage bzw. zumindest in den Nahbereich einer solchen Wandfläche gebracht wird.

Im nächsten Schritt wird dann ein zweites Abschlusselement mit dem gegenüberliegenden aus der Wand herausragenden Ende des Rohrelements gekoppelt. Dabei wird bevorzugt beim Koppeln des ersten wie auch des zweiten Abschlusselementes mit dem Rohrelement die jeweiligen Rohrelemente mit ihren Kopplungsabschnitten entlang der Außenseite des Rohrelementes verschoben.

Nach dem Koppeln des zweiten Abschlusselementes mit dem Rohrelement wird das Rohrelement mittels einer auf das Rohrelement und auf die Abschlusselemente einwirkenden Kraft in axialer Richtung um ein vorbestimmtes Maß ausgelenkt. Mit dem Auslenken wird das Rohrelement in Richtung seiner Längsachse gelängt. Dadurch wird der Abstand zwischen den Abschlusselementen bzw. Teilen derer vergrößert. Abschließend werden das erste und das zweite Abschlusselement mit den Wandflächen in Anlage gebracht. Nach dem Wegfall der auf das Rohrelement einwirkenden Zugkraft wirkt dann am Rohrelement, wegen der elastischen Verformung am Rohrelement, eine Rückstellkraft in Richtung der Wandflächen, woraus ein Verspannen des/der Abschlusselemente gegen die Wandflächen resultiert. In einer bevorzugten Ausgestaltung wird mit dem Verspannen der Abschlusselemente gegen die Wandflächen zumindest zwischen einem der Abschlusselemente und einer Wandfläche ein dazwischen angeordnetes Dichtelement verpresst.

Das erfindungsgemäße Verfahren macht sich dieselben Vorteile zunutze, wie die erfindungsgemäße Vorrichtung zum Durchführen mindestens einer Leitung. Somit sind die zur Durchführungsvorrichtung beschriebenen, bevorzugten Ausführungsformen bzw. Weiterbildungen auch zugleich bevorzugte Ausführungsformen des erfindungsgemäßen Verfahrens und umgekehrt, sofern sich diese nicht widersprechen, weswegen diesbezüglich zur Vermeidung von Wiederholungen auf die obigen Ausführungen verwiesen wird.

Aus den vorstehend beschriebenen Erfindungsaspekten ergibt sich, dass die Durchführung vorrangig als Durchführung durch Seitenwände, Außen- oder Innenwände, eines Gebäudes verwendet wird. Sie ist aber auch geeignet, und wird in einer bevorzugten Ausführung auch dazu verwendet, eine Durchführung durch eine Geschoss- oder Gebäudedecke hindurch bereitzustellen.

Die Erfindung wird im Folgenden anhand eines bevorzugten Ausführungsbeispiels unter Bezugnahme auf die nachfolgenden Figuren näher beschrieben. Hierbei zeigen:
- Fig. 1:: eine Ansicht eines ersten Ausführungsbeispiels einer Vorrichtung zum Durchführen einer Leitung durch eine Wand im Schnitt;
- Fig. 2:: eine perspektivische Teilansicht der Vorrichtung gemäß Fig.1;
- Fig. 3:: eine perspektivische Ansicht eines Abschlusselementes der erfindungsgemäßen Vorrichtung;
- Fig. 4:: eine perspektivische Ansicht einer erfindungsgemäßen Manschette nach Fig.2;
- Fig. 5:: eine perspektivische Ansicht einer erfindungsgemäßen Vorrichtung im montieren Zustand;
- Fig. 6:: eine Ansicht der erfindungsgemäßen Vorrichtung im montierten Zustand durch eine in einem Winkel geneigt zu den Wandflächen der Wand verlaufenden Öffnung;
- Fig. 7:: eine perspektivische Ansicht eines zweiten Ausführungsbeispiels einer erfindungsgemäßen Vorrichtung;
- Fig. 8:: eine perspektivische Ansicht der Vorrichtung gemäß Fig.7 im montierten Zustand;
- Fig. 9a,b:: perspektivische Ansichten eines erfindungsgemäßen Abschlusselements gemäß des zweiten Ausführungsbeispiels nach Fig.7;
- Fig. 10:: Eine erste Ausführungsform einer Vorrichtung gemäß dem zweiten Aspekt der Erfindung mit einer erfindungsgemäßen Manschette;
- Fig. 11:: eine Ansicht einer alternativen Ausgestaltung der Vorrichtung nach Fig. 10 mit der erfindungsgemäßen Manschette und einem an der Manschette aufgenommenen Stopfen;
- Fig. 12:: eine Ansicht einer Vorrichtung mit einer alternativen Ausführungsform einer erfindungsgemäßen Manschette;
- Fig. 13: eine Ansicht der erfindungsgemäßen Manschette nach Fig. 12;
- Fig. 14 und 15:: Ansichten von Vorrichtungen zum Durchführungen von Leitungen mit weiteren Ausführungsformen von daran montierten, erfindungsgemäßen Manschetten.

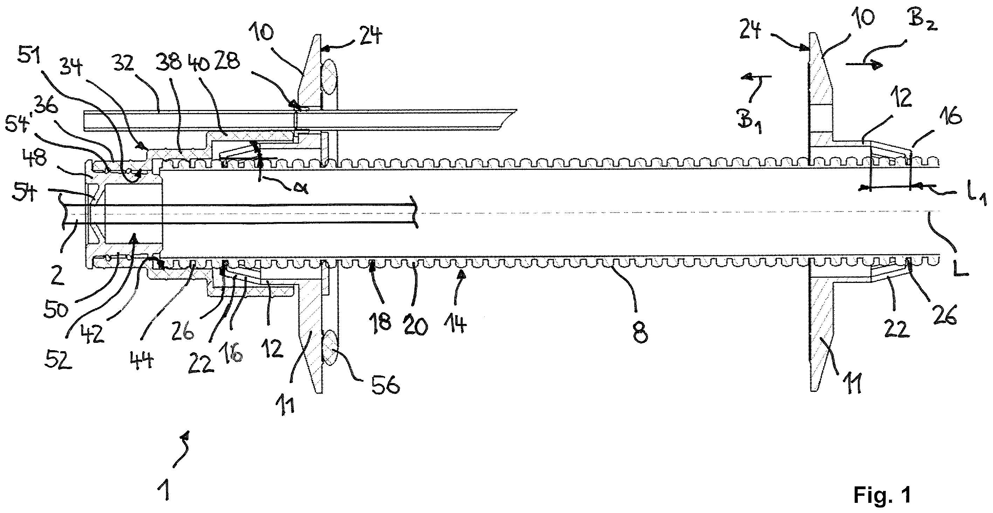

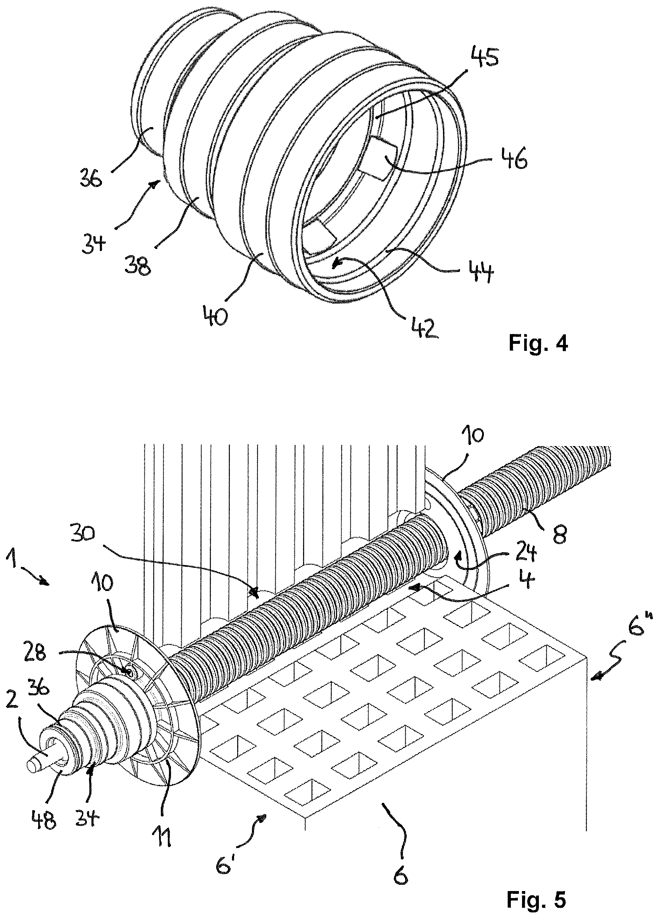

Fig. 1 zeigt eine Ansicht einer Vorrichtung zum Durchführen mindestens einer Leitung 2 durch eine Öffnung 4 in einer Wand 6. Die Vorrichtung 1 umfasst wenigstens ein Rohrelement 8 zum Aufnehmen einer der durch die Öffnung 4 zu führenden Leitung 2 (Fig.5). Die Vorrichtung 1 umfasst ferner zwei Abschlusselemente 10, welche auf voneinander abgewandten Wandflächen 6', 6" der Wand 6 anordenbar und unmittelbar oder mittelbar an die Wandflächen 6', 6" anlegbar sind. Mindestens eines der Abschlusselemente 10, vorzugsweise beide derer, weisen einen nach innen in Richtung auf das Rohrelement 8 weisenden Kopplungsabschnitt 12 auf, wobei der Kopplungsabschnitt 12 zum kraft- und/oder formschlüssigen Koppeln mit der äußeren Oberfläche 14 des Rohrelements 8 in An- oder Eingriff bringbar ist.

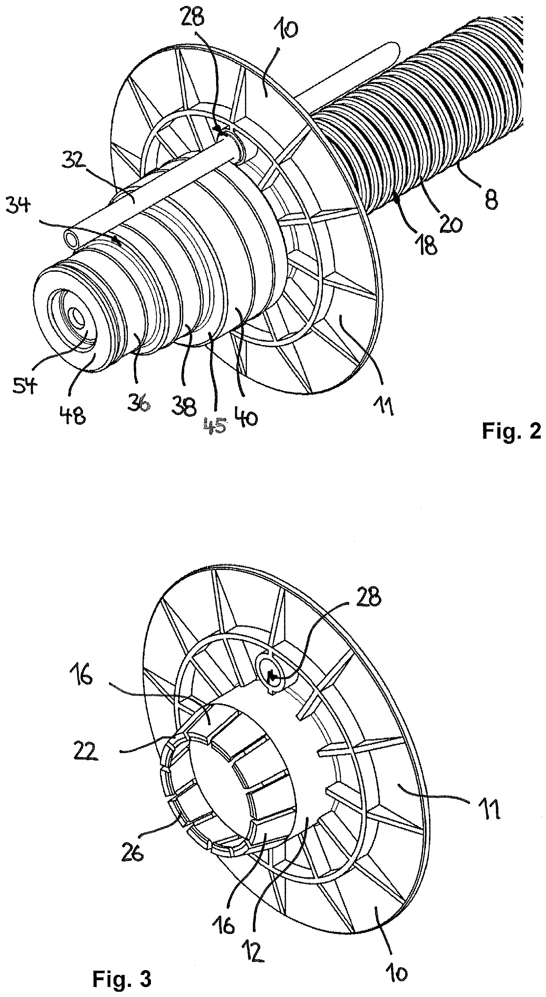

Wie aus Fig. 1 in Verbindung mit Fig. 3 ersichtlich, weist das Abschlusselement 10 zumindest einen sich außerhalb der Öffnung 4 erstreckenden Flanschkörper 11 auf, an dem der Kopplungsabschnitt 12 mit mindestens einem Kopplungselement 16 angeordnet ist. Das Kopplungselement 16 ist formschlüssig mit der äußeren Oberfläche 14 des Rohrelements 8 in Eingriff bringbar. In der vorliegend gezeigten Ausführung sind am Kopplungsabschnitt 12 mehrere Kopplungselemente 16 über den Umfang des Rohrelementes 8 verteilt angeordnet.

Das Rohrelement 8 weist an seiner äußeren Oberfläche 14 Vertiefungen 18 und/oder Vorsprünge 20 auf, wobei der Kopplungsabschnitt 12, insbesondere dessen Kopplungselement 16 dazu eingerichtet ist, mit mindestens einer Vertiefung 18 und/oder einem Vorsprung 20 am Rohrelement 8 formschlüssig zu korrespondieren.

Das vorliegend gezeigte Rohrelement 8 ist bevorzugt als Wellrohr ausgebildet. Vorliegend ist das Rohrelement 8 und vorzugsweise auch mindestens eines der an die Wandflächen 6', 6" der Wand anlegbaren Abschlusselemente 10 axial in Längsrichtung L des Rohrelementes elastisch verformbar, derart, dass die Abschlusselemente 10 im montierten Zustand der Vorrichtung 1, aufgrund des elastischen Verformens des Rohrelements 8 und ggf. auch des Abschlusselementes 10, insbesondere gegen die voneinander abgewandten Wandflächen 6', 6" der Wand 6 (Fig.5) angepresst werden.

Wie die Figuren 1 und 3 ferner zeigen, sind die Kopplungselemente 16 als elastisch verformbare Rast-Haken 22 ausgebildet und greifen insbesondere mit ihrem Endabschnitt 26 in mindestens eine Vertiefung 18 am Rohrelement ein bzw. wirken mit einem Vorsprung 20 an der Oberfläche 14 des Rohrelementes zusammen. Die Kopplungselemente 16 weisen jeweils an ihren freien Enden Endabschnitte 26 auf, welche in der vorliegend gezeigten Ausführung im Wesentlichen radial nach innen in die am Rohrelement 8 ausgebildeten Vertiefungen 18 bzw. zwischen die an dem Rohrelement 8 nach außen vorstehenden Vorsprünge 20 eingreifen.

Die Kopplungselemente 16 erstrecken sich, bezogen auf die Längsachse L des Rohrelementes 8, jeweils in einem spitzen Winkel α außenseitig weg vom Kopplungsabschnitt 12 an den Abschlusselementen 10. Aufgrund der Ausrichtung der Kopplungselemente 16 im spitzen Winkel α zur Längsachse L können die Abschlusselemente 10 mit ihren Anlageflächen 24 in einer ersten Bewegungsrichtung B₁ entlang der äußeren Oberfläche 14 des Rohrelementes bewegt werden. Jedoch bewirken die schräg zur Längsachse L verlaufenden Kopplungselemente 16, dass die Abschlusselemente 10 sich in die entgegengesetzte Bewegungsrichtung B₂ nicht bewegen lassen, sondern eine Arretier-/Verrastfunktion an den erfindungsgemäß ausgebildeten Abschlusselemente 10 umgesetzt ist.

Vorzugsweise sind die Kopplungselemente 16 gleichmäßig über den Umfang des Rohrelements verteilt am Kopplungsabschnitt 12 angeordnet. In der vorliegend gezeigten Ausführung weisen die Kopplungselemente 16 ausgehend vom Kopplungsabschnitt 12 in Richtung der Längsachse L jeweils ein identisches Längenmaß l₁ auf. In einer nicht näher gezeigten Ausführung können die Kopplungselemente 16 ausgehend vom Kopplungsabschnitt 12 unterschiedliche Längenmaße haben.

Wie die Figuren 1, 3 und 5 ferner zeigen, ist an mindestens einem Abschlusselement 10 eine Einfüll-/Entlüftungsöffnung 28 vorgesehen, über die ein Wärmedämmmaterial in einen entsprechend in der Öffnung 4 der Wand 6 begrenzten Aufnahmeraum 30 eingebracht werden kann. Die Einfüllöffnung 28 kann mit einer Einfüllhilfe 32 in Form eines Einfüllschlauches ausgerüstet sein, wodurch das Einfüllen von Wärmedämmmaterial in den Aufnahmeraum 30 vereinfacht ist.

Wie den Figuren 1, 2 und 4 zu entnehmen, weist die Vorrichtung 1 ferner eine bevorzugt auf der außenseitigen Wandfläche 6' der Wand zu montierende Manschette 34 auf, welche wenigstens teilweise elastisch verformbar ausgebildet ist. Die Manschette 34 ist einerseits mit dem Abschlusselement 10 und andererseits mit der äußeren Oberfläche 14 des Rohrelementes 8 abdichtend in Anlage bringbar. Die Manschette 34 weist in der vorliegend gezeigten Ausführungsform eine dreistufige Ausgestaltung mit drei zylinderförmigen Dichtabschnitten 36, 38, 40 auf, wobei die drei Dichtabschnitte 36, 38, 40 unterschiedliche Durchmesser haben.

Die Figuren 1 und 4 zeigen, dass auf der inneren Oberfläche 42 der Dichtabschnitte 36, 38, 40 der Manschette 34 mehrere Vorsprünge 44 in Form von nach innen abstehenden Materialstegen ausgebildet sind. Einige der Vorsprünge 44 stehen kraft- und/oder formschlüssig in Eingriff mit dem Rohrelement 8 bzw. dem Kopplungsabschnitt 12 am Abschlusselement 10 auf z.B. der Außenseite der Wand 6. In einem Übergangsbereich 45 (Fig.2, 4) zwischen den zylinderförmigen Dichtabschnitten 38, 40 sind innenseitig mehrere Andrückkeile 46 ausgebildet, welche bewirken, dass die Kopplungselemente 16 nach erfolgter Montage der Vorrichtung 1 in Eingriff mit der jeweiligen Vertiefung 18 und/oder dem Vorsprung 20 verbleiben.

Die Vorsprünge 44 auf der Innenseite der zylindrischen Abschnitte 36, 38, 40 sind vorliegend als umlaufende Materialstege ausgebildet, so dass diese insbesondere mit den Vertiefungen 18 am Rohrelement 8 bzw. entsprechend korrespondierende Vertiefungen am Kopplungsabschnitt 12 formschlüssig korrespondieren.

Fig. 5 zeigt die erfindungsgemäße Vorrichtung 1 im montierten Zustand innerhalb der Öffnung 4 in der Wand 6. Wie aus Fig. 5 zu sehen ist, erstreckt sich das Rohrelement 8 durch die Öffnung 4 in der Wand 6 hindurch, wobei das Rohrelement 8 mit seinen Enden zu beiden Seiten an den Wandflächen 6', 6" der Wand vorsteht. Die mit dem Rohrelement 8 kraft- und/oder formschlüssig gekoppelten Abschlusselemente 10 stehen jeweils mit den Wandflächen 6', 6" direkt oder indirekt, also unter Zwischenschaltung ein oder mehrerer dazwischen angeordneter Bauteile, in Kontakt.

Wie Fig. 5 ferner zeigt, ist an der Vorrichtung 1 ein Dichtstopfen 48 vorgesehen, welcher an der Manschette 34 und/oder dem Rohrelement 8 befestigbar ist. Der Dichtstopfen 48, der, wie in Verbindung mit Fig.1 zu entnehmen, einen zylindrischen Grundkörper 50 aufweist wirkt mit seiner Außenseite mit dem Innendurchmesser des zylindrischen Dichtabschnitts 36 an der Manschette 34 bzw. abschnittsweise mit dem inneren freien Querschnitt des Rohrelementes 8 zusammen. Der Dichtstopfen 48 ist klemmend in einem innenseitigen Aufnahmeabschnitt 51 (Fig.1) des Dichtabschnitts 36 aufgenommen.

Der Dichtstopfen 48 ist insbesondere dazu eingerichtet, sowohl gegenüber der Manschette 34 bzw. dem Rohrelement 8 und/oder gegenüber der durch das Rohrelement 8 hindurchgeführten Leitung 2 abzudichten. Am Grundkörper 50 ist für die Leitung 2 eine Durchgang 52 ausgebildet. Am Dichtstopfen 48 sind zudem mindestens ein radial nach innen und nach außen abstehendes Dichtungsteil 54, 54' angeordnet, welche vorzugsweise als Dichtstege oder Dichtlippe ausgebildet sind.

Wie in Verbindung mit Fig. 1 verdeutlicht, ist dem zum Beispiel auf der Außenseite der Wand 6 angeordneten Abschlusselement 10 ein Dichtelement 56 zugeordnet, das mit dem elastischen Verspannen der Vorrichtung 1 und dem in Anlagebringen des Abschlusselementes 10 an der Wandfläche 6' der Wand 6 und dem Aufbringen wenigstens axial in Richtung der Längsachse L des Rohrelementes 8 wirkenden Druckkraft zwischen dem Abschlusselement 10 und der Wand 6 zusammengepresst wird. Darüber ist die Abdichtfunktion zwischen dem Abschlusselement 10 und der Wand 6 erreicht.

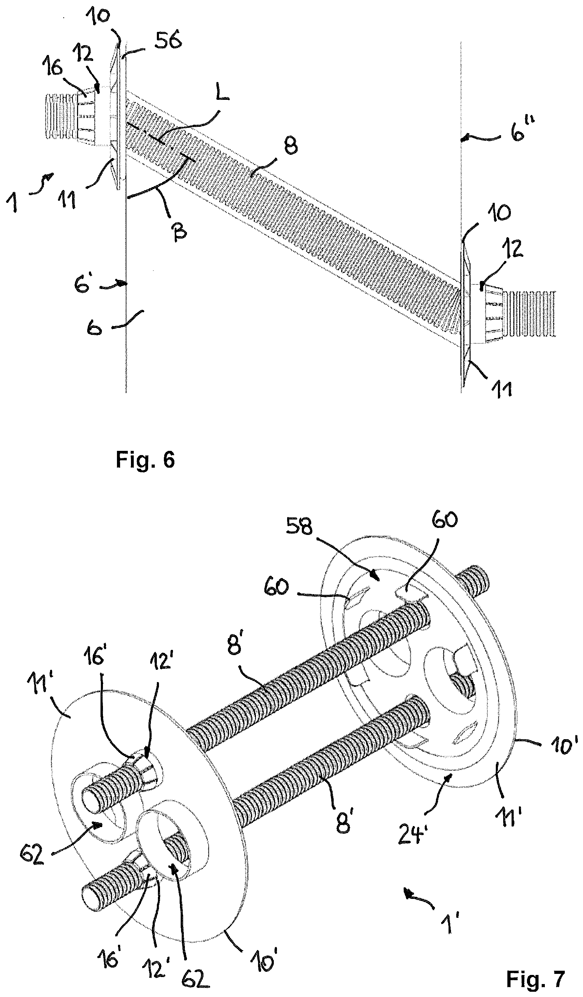

Fig. 6 zeigt die Verwendung der Vorrichtung 1 beim Hindurchführen einer Leitung durch eine Öffnung 4 in einer Wand 6, die in einem Winkel β geneigt zu der Wandfläche 6' der Wand 6 verläuft. Mit der Ausgestaltung des Rohrelements 8 als Wellrohr kann das Rohrelement zu den Abschlusselementen 10 abgewinkelt werden. Um die winklige Ausrichtung des Rohrelements 8 zum Abschlusselement 10 zu erreichen, wird das Rohrelement 8 in einem Wandbereich gestaucht und im gegenüberliegenden Wandbereich gestreckt, wie Fig. 6 zu entnehmen. Anstelle eines Wellrohrs kann auch ein flexibler Schlauch eingesetzt werden, an dessen Oberfläche, ähnlich wie beim Rohrelement 8, Vertiefungen und/oder Vorsprünge ausgebildet sein können.

Fig. 7 zeigt eine weitere Ausführungsform einer erfindungsgemäßen Vorrichtung 1', welche im Vergleich zur Vorrichtung 1 zwei Rohrelemente 8' aufweist, welche zum Aufnehmen von durch die Öffnung 4 in einer Wand zu führenden nicht näher gezeigten Leitungen eingerichtet sind. Hinsichtlich der grundsätzlichen Ausgestaltung und Funktion der Vorrichtung 1' wird auf die Ausführungen zu der in den Figuren 1 bis 6 gezeigten Vorrichtung verwiesen. Die Abschlusselemente 10' der Vorrichtung 1' weisen für jedes der Rohrelemente 8' einen Kopplungsabschnitt 12' auf, wobei jeder Kopplungsabschnitt 12' mit seinen Kopplungselemente 16' zum kraft- und/oder formschlüssigen Koppeln mit der äußeren Oberfläche 14 der Rohrelemente 8' in An- oder Eingriff bringbar ist.

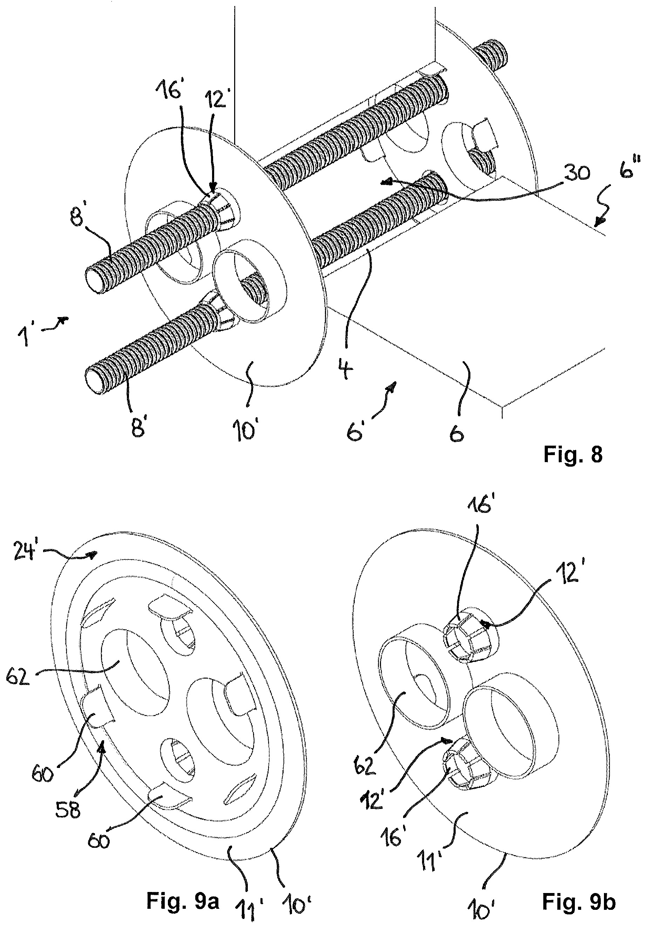

Auch die Rohrelemente 8' und vorzugsweise auch eines der an eine Wand 6 anlegbaren Abschlusselemente 10' ist wenigstens axial in Längsrichtung des Rohrelements 8' elastisch verformbar, so dass beim Montieren der Vorrichtung 1 in der in Fig. 8 gezeigten Öffnung 4 in einer Wand 6 die Rohrelemente 8' in axialer Richtung gelängt und ggf. wenigstens eines der Abschlusselemente mit in Anlagebringen an einer jeweils zugeordneten Wandfläche 6', 6" derart verformt wird, dass mit dem endgültigen Fixieren des oder der Abschlusselemente entlang der Rohrelemente 8' innerhalb Rohrelemente 8' oder dem Abschlusselementen 10' Rückstellkräfte wirken, so dass das Abschlusselement 10' in montiertem Zustand eine Anpresskraft auf die Wand 6 erzeugt.

Die Figuren 9a und 9b zeigen ein Abschlusselement 10' jeweils von der Innen- bzw. Außenseite. Wie die vorliegende Ausführung zeigt, ist auf der der Wandfläche zugeordneten Anlagefläche 24' eine Zentrierhilfe 58 aufweisend mehrere um den Mittenbereich des Abschlusselements 10' angeordnete vorstehende Zentrierstege 60 angeordnet. Die beiden außenseitig am Abschlusselement 10' ausgebildeten Kopplungsabschnitte 12' weisen ebenfalls mehrere sich über den Umfang des damit zu koppelnden Rohrelements 8' verteilt angeordnete Kopplungselemente 16' auf.

An den Abschlusselementen 10' sind in der vorliegend gezeigten Ausführung zudem zwei Durchgänge 62 für durch die Öffnung 4 hindurchzuführende, medienführende Leitungen (nicht gezeigt) ausgebildet.

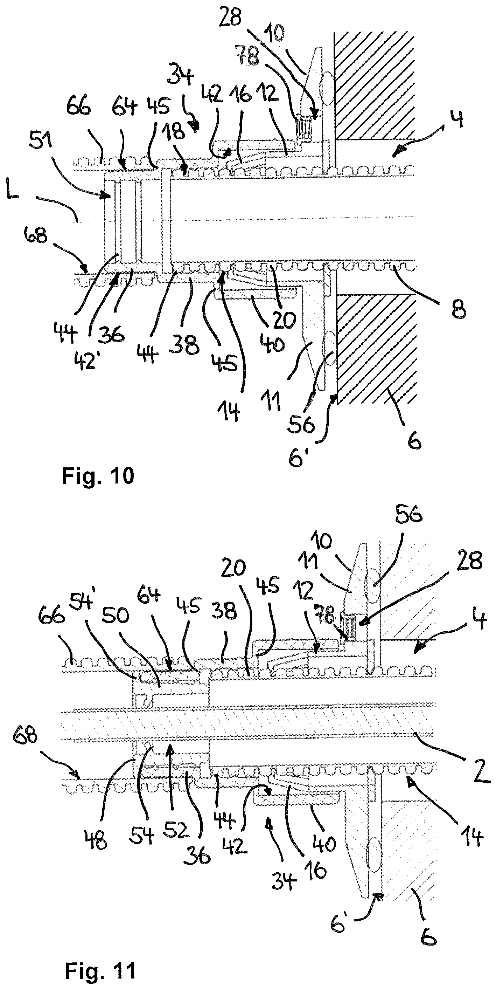

In Fig. 10 ist ein zweiter Aspekt der vorliegenden Erfindung in Form einer einerseits mit dem Abschlusselement 10 und andererseits mit der äußeren Oberfläche 14 des Rohrelements 8 abdichtend in Anlage gebrachten, wenigstens teilweise elastisch verformbaren Manschette 34 abgebildet. Die Manschette 34 ist insbesondere auf der außenseitigen Wandfläche 6' der Wand 6 montiert. In der gezeigten Ausführung ist die Manschette 34 dreistufig ausgebildet, weist also drei zylinderförmige Dichtabschnitte 36, 38, 40 auf. Die Dichtabschnitte 36, 38, 40 weisen jeweils unterschiedliche Durchmesser zueinander auf und sind über sich vornehmlich radial erstreckende Übergangsbereiche 45 miteinander verbunden.

Ähnlich wie zum ersten Aspekt sind auf der inneren Oberfläche 42 der Dichtabschnitte 36, 38, 40 der Manschette 34 mehrere Vorsprünge 44 vorgesehen, welche dazu eingerichtet sind, gegenüber etwaigen damit in Kontakt gebrachten Bauteilen wie beispielsweise das Rohrelement 8 bzw. dem Kopplungsabschnitt 12 am Abschlusselement 10 in abdichtende Anlage gebracht zu werden. Einige der Vorsprünge 44 stehen insbesondere kraft- und/oder formschlüssig in Eingriff mit am Rohrelement 8 bzw. dem Kopplungsabschnitt 12 des Abschlusselements 10 ausgebildeten Vertiefungen 18.

Im Übergangsbereich 45 zwischen den zylinderförmigen Dichtabschnitten 38, 40 können, wie in Verbindung mit Fig. 4 zu sehen ist, an der inneren Oberfläche 42 mehrere Andrückkeile 46 ausgebildet sein. Die Andrückkeile 46 bewirken, dass die Kopplungselemente 16, am Kopplungsabschnitt 12 des Abschlusselements 10 nach erfolgter Montage der Vorrichtung 1 im Bereich der Öffnung 4 an der Wand 6 in Eingriff mit den jeweiligen Vertiefungen 18 und/oder Vorsprüngen 20 am Rohrelement 8 verbleiben.

Wie aus Fig. 10 ferner ersichtlich, weist der Dichtabschnitt 36 mit dem kleinsten Querschnitt einen Aufnahmeabschnitt 64 auf, der eingerichtet ist, mit einem Hüls- oder Schutzrohr 66 zusammenzuwirken, das mit seiner Innenseite 68 auf die Umfangsfläche 42' des zylindrischen Dichtabschnitts 36 abdichtend aufgeschoben wird. Vorzugsweise weist der Dichtabschnitt 36 gegenüber der Innenseite des Hülls-/Schutzrohres 66 ein Übermaß auf, sodass der Dichtabschnitt 36 beim Inkontaktbringen mit dem Hüls-/Schutzrohr 66 in radialer Richtung gestaucht wird.

Fig. 11 zeigt eine weitere Ausgestaltung einer Vorrichtung 1 mit einer Manschette 34, die ähnlich wie die in Fig. 10 gezeigte Ausführung ausgebildet ist. Zusätzlich zu dem den zylindrischen Dichtabschnitt 36 außenseitig umgebenden Hüls-/Schutzrohr 66 wirkt mit der inneren Oberfläche 42 des Dichtabschnitts 36 ein Dichtstopfen 48 zusammen, der in der vorliegend gezeigten Ausführung an einem innenseitigen Aufnahmeabschnitt 64 der Manschette 34 aufgenommen ist. In einer alternativen Ausführung kann der Dichtstopfen 48 auch an dem inneren freien Querschnitt des durch die Öffnung 4 in der Wand 6 hindurchgeführten Rohrelements 8 aufgenommen sein.

Der Dichtstopfen 48 ist dazu eingerichtet, gegenüber der Manschette 34 sowie auch gegenüber der durch das Rohrelement 8 hindurchgeführten Leitung 2 abzudichten. Der Dichtstopfen 48 weist einen zylindrischen Grundkörper 50 auf, an dem für die durch die Öffnung 4 hindurchzuführende Leitung 2 ein Durchgang 52 ausgebildet ist. Am Dichtstopfen 48 sind zudem mindestens ein jeweils radial nach innen und nach außen abstehendes Dichtungsteil 54, 54' angeordnet, welche vorzugsweise als Dichtstege oder Dichtlippen ausgebildet sind.

Mithilfe des mit der Manschette 34 zusammenwirkenden Dichtstopfens 48 ist die Abdichtwirkung der Manschette gegenüber dem Rohrelement 8 und der durch die Öffnung 4 hindurchgeführten Leitung 2 erzielt, welche z.B. eine Daten- oder Medienleitung für insbesondere ein Wärmepumpensystem oder eine Klimaanlage sein kann.

Das in den Fig. 10-12, 14 und 15 gezeigte Abschlusselement 10 kann ebenfalls eine Einfüllöffnung 28 aufweisen, mit der eine z.B. in den Fig. 1 oder 2 gezeigte Einfüllhilfe 32 koppelbar ist, über die das Einbringen eines Dicht- oder Wärmedämmmaterials in den von der Öffnung 4 begrenzten Aufnahmeraum 30 erfolgen kann. Die Einfüllöffnung 28 kann, wie in den Figuren 10, 11, 12 und 14 gezeigt, durch einen Verschlussstopfen 78 verschlossen werden. Vor Einfüllen des Dicht- oder Wärmedämmmaterials ist der Verschlussstopfen 78 zu entfernen.

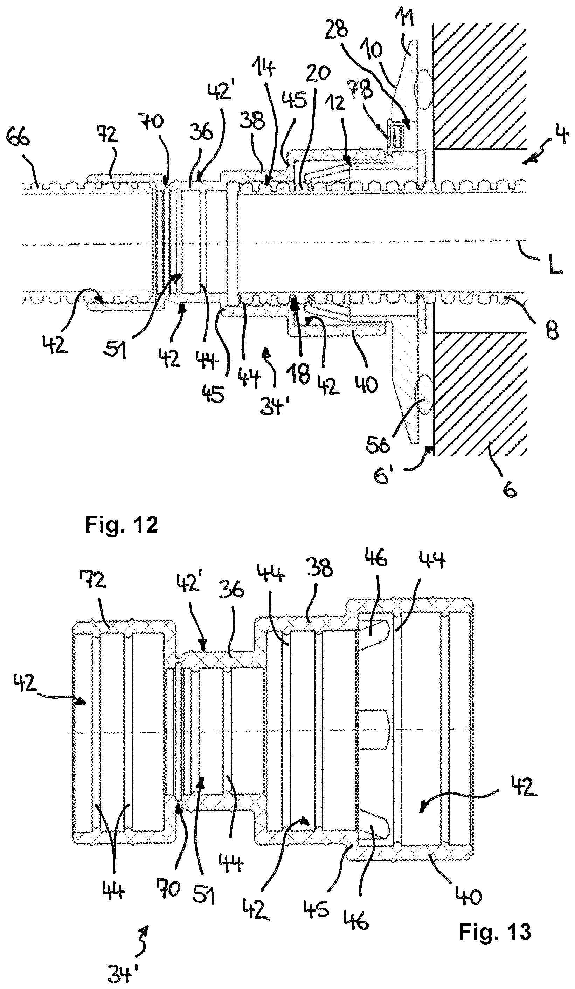

Fig. 12 und 13 zeigen eine weitere Ausführungsform einer mit der Vorrichtung 1 zusammenwirkenden Manschette 34', welche einen an den im Querschnitt kleinsten Dichtabschnitt 36 angrenzenden Verlängerungsabschnitt 72 aufweist. Der Verlängerungsabschnitt 72 ist mittels einer Solltrennstelle 70 mit dem Dichtabschnitt 36 verbunden. Der Verlängerungsabschnitt 72 ist zum außenseitigen Aufnehmen eines Hüls-/Schutzrohres 66 eingerichtet. In einer bevorzugten Ausführung weist der Verlängerungsabschnitt 72, ähnlich wie die Dichtabschnitte 36, 38, 40, auf seiner inneren Oberfläche 42 ebenfalls mehrere Vorsprünge 44 auf, welche als nach innen abstehende und bevorzugt in Umfangsrichtung des Verlängerungsabschnitts 72 umlaufend ausgebildete Materialstege ausgeführt sind. In einer möglichen Ausführung stehen die Vorsprünge 44 wiederum kraft- und/oder formschlüssig in Eingriff mit dem Hüls-/Schutzrohr 66, wobei der Verlängerungsabschnitt 72, aufgrund der elastisch verformbaren Ausgestaltung der Manschette 34', mit seiner Längsachse L in einem Winkel geneigt zur Längsachse L des Rohrelements 8 ausgerichtet werden kann.

Fig. 13 zeigt eine Schnittdarstellung der erfindungsgemäßen Manschette 34', wobei verdeutlicht wird, dass der Verlängerungsabschnitt 72 über die Solltrennstelle 70, welche eine Materialschwächung vom Dichtabschnitt 36 zum Verlängerungsabschnitt 72 ausbildet, abgetrennt werden kann. Ähnlich wie die zum ersten Aspekt der Erfindung beschriebene Manschette 34, weist die Manschette 34' im Übergangsbereich 45 zwischen den zylinderförmigen Dichtabschnitten 38, 40 mehrere innenseitig vorstehende Andrückkeile 46 auf. Mittels der Andrückkeile 46 ist bewirkt, dass die in Fig. 12 gezeigten Kopplungselement 16 am Kopplungsabschnitt 12 des Abschlusselements 10 nicht selbsttätig außer Eingriff mit den Vertiefungen 18 bzw. Vorsprüngen 20 (Fig.10, 12) für eine Kraftschlussverbindung mit dem Rohrelement 8 gelangen können.

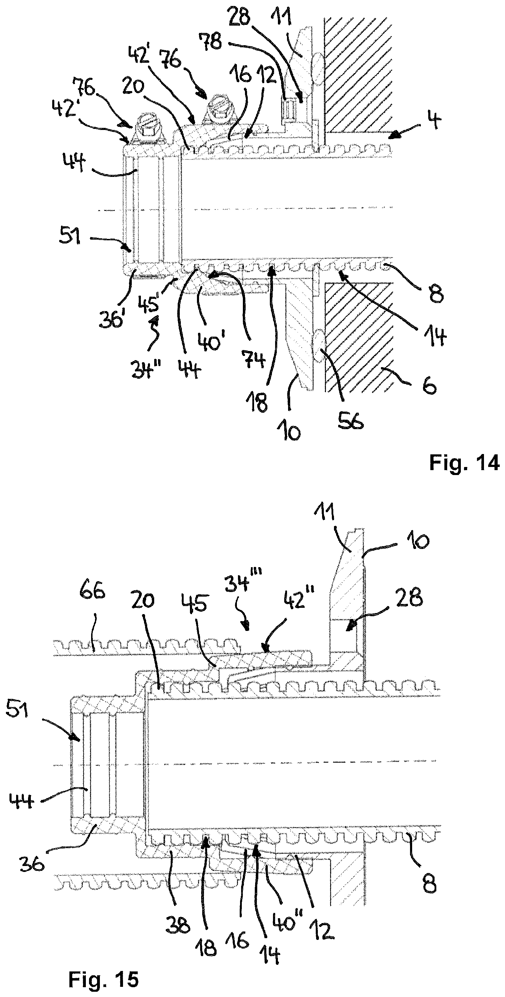

Fig. 14 zeigt eine Vorrichtung 1 zum Durchführen mindestens einer Leitung 2 (Fig.11) durch eine Öffnung 4 in einer Wand in Verbindung mit einer weiteren Ausgestaltung einer erfindungsgemäßen Manschette 34". Die Manschette 34" weist in der vorliegend gezeigten Ausführung eine zweistufige Ausgestaltung mit genau zwei zylinderförmigen Dichtabschnitten 36', 40' auf. Die zweistufige Manschette 34' weist einen Dichtabschnitt 40' auf, der zum kombinierten Inanlagebringen mit dem Kopplungsabschnitt 12 an das Abschlusselement 10 und zum Arretieren der Manschette 34" relativ zur äußeren Oberfläche 14 des Rohrelements 8 eingerichtet ist. Der Dichtabschnitt 40' weist mindestens einen mit einer Vertiefung 18 oder einem Vorsprung 20 des Rohrelements 8 in kraft- oder formschlüssige Verbindung tretenden Vorsprung 44 auf. Zudem ist am Dichtabschnitt 40' eine mit den Kopplungselementen 16 am Kopplungsabschnitt 12 korrespondierend ausgebildete Andrückfläche 74 vorgesehen, welche entlang eines Abschnitts in axialer Richtung bevorzugt kegelförmig zum Anlegen an die Kopplungselemente 16 des Kopplungsabschnitts 12 ausgebildet ist.

Der Dichtabschnitt 36' ist mittels eines Übergangsbereichs 45' direkt mit dem Dichtabschnitt 40' verbunden. Zudem ist der Dichtabschnitt 36' in axialer Richtung unmittelbar an das freie Ende des Rohrelements 8 angrenzend angeordnet.

Der Dichtabschnitt 36' kann mit einem innenseitigen Aufnahmeabschnitt 51 für einen daran aufzunehmenden beispielhaft in Fig. 11 gezeigten Dichtstopfen 48 ausgerüstet sein. An den äußeren Umfangsflächen 42' der Dichtabschnitte 36', 40' sind in der vorliegend gezeigten Ausführung Spannmittel 76 in Form von Spannschellen angeordnet. Mithilfe der Spannmittel 76 kann die Manschette 34" am Rohrelement 8 bzw. dem Kopplungsabschnitt 12 des Abschlusselements 10 fixiert werden. Das am Dichtabschnitt 36' außenseitig angeordnete Spannmittel 76 dient vorzugsweise zum Arretieren eines in den Aufnahmeabschnitt 51 des Dichtabschnitts 36' eingesetzten, nicht näher gezeigten Hüls-/Schutzrohres 66. Alternativ kann anstelle des Hüls-/Schutzrohres 66 auch ein Dichtstopfen 48 (Fig.11) in den Aufnahmeabschnitt 51 am Dichtabschnitt 36' eingesetzt werden.

In Fig. 15 ist eine weitere Ausführungsform einer mit einer Vorrichtung 1 kombinierbaren Manschette 34‴ gezeigt, welche ähnlich der Manschette 34 in den Fig. 10 und 11 ausgebildet ist. Im Gegensatz zur zylindrischen Ausgestaltung der äußeren Umfangsfläche 42' an der Manschette 34, weist der Dichtabschnitt 40", der zumindest teilweise mit dem Kopplungsabschnitt 12 am Abschlusselement 10 zusammenwirkt, an seiner äußeren Umfangsfläche 42' eine sich vom Übergangsbereich 45 zwischen den Dichtabschnitten 38 und 40" in Richtung des dem Abschlusselement 10 angenäherten Endes der Manschette 34‴ erweiternde Außenkontur auf. Der Außendurchmesser des Dichtabschnitts 40" erweitert sich vorzugsweise geringfügig, insbesondere konisch, vom Übergangsbereich 45 in Richtung des dem Abschlusselement zugeordneten Endes der Manschette 34‴.

Die Manschette 34‴ weist ansonsten eine im Vergleich zu den in den Fig. 1 bis 5 sowie 10 und 11 gezeigten Ausführungen zumindest ähnliche, nahezu identische Ausgestaltung auf. Um unnötige Wiederholungen zu vermeiden, wird in Bezug auf die Ausgestaltung der Manschette 34‴ auf die obigen Ausführungen zur Manschette 34 Bezug genommen. Durch die konische Außenkontur des Dichtabschnitts 40" kann ein auf den Durchmesser des Dichtabschnitts 40" abgestimmtes Hüls-/Schutzrohr 66 vereinfacht außenseitig über den Dichtabschnitt 40" abdichtend aufgeschoben werden, wobei das Hüls-/Schutzrohr 66, aufgrund seiner im Vergleich zur Manschette 34‴ höheren Materialsteifigkeit, eine Klemmwirkung am Dichtabschnitt 40" bewirkt ist.

Im Aufnahmeabschnitt 51 am Dichtabschnitt 36 der Manschette 34‴ kann wiederum ein damit abdichtend in Wirkverbindung bringbarer Dichtstopfen 48 angeordnet werden.

Die als zweiter Erfindungsaspekt beschriebenen Ausführungsformen einer Manschette 34 bis 34‴ können, wenn auch vorliegend nicht in den Zeichnungen abgebildet, in Verbindung mit einer Vorrichtung 1 beim Hindurchführen einer Leitung durch eine Öffnung 4 in einer Wand 6 in einem Winkel β geneigt zur Wandfläche 6' verwendet werden. Mittels wenigstens einer der Manschetten 34 bis 34‴ kann auch der auf der Gebäudeaußenseite angeordnete Kopplungsabschnitt 12 mit seinen Kopplungselementen 16 über eine solche Manschette mit der äußeren Oberfläche 14 des Rohrelements 8 abgedichtet werden.

Gleiche oder ähnliche Bauteile sind mit denselben Bezugszeichen bezeichnet.

### Bezugszeichenliste

- 1, 1': Vorrichtung
- 2: Leitung
- 4,: Öffnung
- 6: Wand
- 6', 6": Wandfläche
- 8, 8': Rohrelement
- 10, 10': Abschlusselement
- 11, 11': Flanschkörper
- 12, 12': Kopplungsabschnitt
- 14: Oberfläche Rohrelement
- 16, 16': Kopplungselement
- 18: Vertiefungen
- 20: Vorsprung
- 22: Rast-Haken
- 24, 24': Anlagefläche Abschlusselement
- 26: Endabschnitt
- 28: Einfüll-/Entlüftungsöffnung
- 30: Aufnahmeraum
- 32: Einfüllhilfe
- 34, 34', 34", 34‴: Manschette
- 36, 36', 38: Dichtabschnitt
- 40, 40', 40": Dichtabschnitt
- 42: Oberfläche Manschette
- 42': Umfangsfläche
- 44: Vorsprung
- 45, 45': Übergangsbereich
- 46: Andrückkeil
- 48: Dichtstopfen
- 50: Grundkörper
- 51: Aufnahmeabschnitt innenseitig
- 52: Durchgang
- 54, 54': Dichtungsteil
- 56: Dichtelement
- 58: Zentrierhilfe
- 60: Zentriersteg
- 62: Durchgang
- 64: Aufnahmeabschnitt außenseitig
- 66: Hüls-/Schutzrohr
- 68: Innenseite
- 70: Solltrennstelle
- 72: Verlängerungsabschnitt
- 74: Andrückfläche
- 76: Spannmittel
- 78: Verschlussstopfen
- α, β: Winkel
- B₁, B₂: Bewegungsrichtung
- L: Längsachse
- l₁: Längenmaß

## Patentansprüche

1. Vorrichtung (1) zur Durchführung von mindestens einer Leitung (2) durch eine Öffnung (4) in einer Wand (6) und/oder Geschossdecke, mit
wenigstens einem Rohrelement (8, 8') zum Aufnehmen der durch die Öffnung (4) zu führenden Leitung (2), und
wenigstens einem Abschlusselement (10, 10'), welches unmittelbar oder mittelbar an einer Wandfläche der Wand (6) anlegbar ist,
wobei das Abschlusselement (10, 10') einen nach innen in Richtung auf das Rohrelement (8, 8') weisenden Kopplungsabschnitt (12, 12') aufweist, wobei der Kopplungsabschnitt (12, 12') zum kraft- und/oder formschlüssigen Koppeln mit der äußeren Oberfläche (14) des Rohrelements (8, 8') in An- oder Eingriff bringbar ist,
**dadurch gekennzeichnet, dass** das Rohrelement (8, 8') wenigstens axial in Längsrichtung des Rohrelements (8, 8') elastisch verformbar ist, derart, dass das Abschlusselement (10, 10') im montierten Zustand an die Wand (6) angepresst wird.

2. Vorrichtung (1) nach Anspruch 1,
**dadurch gekennzeichnet, dass** der Kopplungsabschnitt (12) mindestens ein Kopplungselement (16, 16') aufweist, das formschlüssig mit der äußeren Oberfläche (14) des Rohrelements (8, 8') in Eingriff bringbar ist.

3. Vorrichtung (1) nach Anspruch 1 oder 2,
**dadurch gekennzeichnet, dass** das Rohrelement (8, 8') an seiner äußeren Oberfläche Vertiefungen (18) und/oder Vorsprünge (20) aufweist, insbesondere als Wellrohr ausgebildet ist, und der Kopplungsabschnitt (12) so ausgebildet ist, dass der Kopplungsabschnitt (12) mit mindestens einer Vertiefung (18) und/oder Vorsprung (20) formschlüssig korrespondiert.

4. Vorrichtung (1) nach einem der Ansprüche 1 bis 3,
wobei das Rohrelement (8, 8') dazu eingerichtet ist, in einem Winkel im Bereich von 0° bis 70° zur Wandfläche (6', 6") der Wand (6) oder Geschossdecke verlaufend verlegt zu werden.

5. Vorrichtung (1) nach einem der Ansprüche 1 bis 4,
**dadurch gekennzeichnet, dass** das mindestens eine Kopplungselement (16, 16') als elastisch verformbarer Rast-Haken (22) ausgebildet ist, der mit mindestens einer Vertiefung (18) am Rohrelement (8, 8') verrastbar ist, und/oder
dass das Kopplungselement (16, 16') sich außenseitig am Abschlusselement (10, 10') in einem spitzen Winkel (α) bezogen auf eine Längsachse (L) des Rohrelements (8, 8') weg erstreckt.

6. Vorrichtung (1) nach Anspruch 2 bis 5,
**dadurch gekennzeichnet, dass** eine Vielzahl von Kopplungselementen (16, 16') über den Umfang des Rohrelements (8, 8') verteilt an dem Kopplungsabschnitt ('12, 12') angeordnet sind, wobei vorzugsweise Kopplungselemente (16, 16') unterschiedlicher Längen vorgesehen sind.

7. Vorrichtung (1) nach Anspruch 6,
**dadurch gekennzeichnet, dass** mindestens zwei Gruppen von Kopplungselementen (16, 16') mit unterschiedlichen Längen ausgebildet sind.

8. Vorrichtung (1) nach mindestens einem der vorstehenden Ansprüche,
**gekennzeichnet durch** eine wenigstens teilweise elastisch verformbare Manschette (34-34‴) mit wenigstens zwei axial aneinander angrenzenden Dichtabschnitten (36-40") mit gleich oder unterschiedlich großen Querschnitten, welche einerseits mit einem der Abschlusselemente (10, 10') und andererseits mit der äußeren Oberfläche des Rohrelements (8, 8'), vorzugsweise abdichtend, in Anlage bringbar ist.

9. Vorrichtung (1) nach Anspruch 8,
**dadurch gekennzeichnet, dass** an der inneren Oberfläche (42) der Manschette (34-34‴), insbesondere deren Dichtabschnitte (36-40"), mehrere Vorsprünge (44) radial nach innen abstehend ausgebildet sind, welche mit der Oberfläche (14) des Rohrelements (8, 8') in kraftschlüssigen und/oder bevorzugt formschlüssigen Eingriff, bringbar sind.

10. Vorrichtung (1) nach Anspruch 9,
**dadurch gekennzeichnet, dass** die Vorsprünge (44) als umlaufende oder diskrete Materialstege ausgebildet sind, vorzugsweise so ausgebildet sind, dass sie mit den Vertiefungen (18) korrespondieren.

11. Vorrichtung (1) nach einem der vorstehenden Ansprüche 8 bis 10,
**dadurch gekennzeichnet, dass** die Manschette (34-34‴) und/oder das Rohrelement (8, 8') einen innenseitigen Aufnahmeabschnitt (51) für einen darin einsetzbaren Dichtstopfen (48) aufweist, der mindestens einen Durchgang (52) zum Hindurchführen der Leitung (2) aufweist und dazu eingerichtet ist, gegenüber der Manschette (34) und der hindurchgeführten Leitung (2) abzudichten.

12. Vorrichtung (1) nach einem der vorstehenden Ansprüche 8 bis 11,
**dadurch gekennzeichnet, dass** die Manschette (34-34‴) an einem ihrer Dichtabschnitte (36-40") einen Aufnahmeabschnitt (51, 64) für ein damit in Kontakt bringbares Hülsrohr (66) und/oder ein die Manschette (34-34‴), zumindest bezogen auf das Rohrelement (8, 8'), arretierendes Spannmittel (76) aufweist.

13. Vorrichtung (1) nach einem der vorstehenden Ansprüche 8 bis 12,
**dadurch gekennzeichnet, dass** mindestens einer der Dichtabschnitte (36-40") eine äußere Umfangsfläche (42') aufweist, welche sich in axialer Richtung im Querschnitt, insbesondere konisch, aufweitet.

14. Vorrichtung (1) nach einem der vorstehenden Ansprüche 8 bis 13,
**dadurch gekennzeichnet, dass** die Manschette (34-34‴) einen an den im Querschnitt kleinsten Dichtabschnitt (36, 36') angrenzenden Verlängerungsabschnitt (72) aufweist, der vorzugsweise mittels einer Solltrennstelle (70) mit dem Dichtabschnitt (36, 36') verbunden und zum, insbesondere außenseitigen, Aufnehmen eines Hülsrohres (66) eingerichtet ist.

15. Vorrichtung (1) nach einem der vorstehenden Ansprüche 11 bis 14,
**dadurch gekennzeichnet, dass** der Dichtstopfen (48) mindestens ein radial nach innen und/oder außen abstehendes Dichtungsteil (54, 54'), vorzugsweise eine Dichtlippe, aufweist.

16. Vorrichtung (1) nach mindestens einen der vorstehenden Ansprüche,
**dadurch gekennzeichnet, dass** an mindestens einem der Abschlusselemente (10, 10') wenigstens ein Dichtelement (56) angeordnet ist, das im montierten Zustand zwischen dem vorzugsweise flanschartigen Abschlusselement (10, 10') und der Wand (6) angeordnet und verspannt ist, und/oder
eine Zentrierhilfe (58) für zumindest das radiale Ausrichten des Abschlusselements (10, 10') zur Öffnung (4) vorgesehen ist.

17. Vorrichtung (1) nach mindestens einen der vorstehenden Ansprüche,
**dadurch gekennzeichnet, dass** das Abschlusselement (10, 10') zusätzlich zu seinem wenigstens einen Kopplungsabschnitt (12, 12') für das Rohrelement (8, 8') wenigstens einen Durchgang (62) für eine medienführende Leitung aufweist.

18. Vorrichtung (1) nach mindestens einen der vorstehenden Ansprüche,
**dadurch gekennzeichnet, dass** der Kopplungsabschnitt (12, 12') mindestens ein im Querschnitt veränderbares Spannteil aufweist, das mit einem außenseitig am Spannteil in Wirkverbindung bringbaren Spannmittel zum kraftschlüssigen Inangriffbringen mit der äußeren Oberfläche des Rohrelements (8, 8') eingerichtet ist.

19. Verfahren zum Installieren einer Vorrichtung (1) nach einem der Ansprüche 1 bis 18, zum Durchführen von zumindest einer Leitung (2) durch eine Öffnung (4) in einer Wand (6), umfassend die Schritte:
- Bereitstellen oder Herstellen einer Öffnung (4) in einer Gebäude-Wand (6);
- Koppeln eines ersten Abschlusselements (10, 10') mit wenigstens einem Rohrelement (8, 8');
- Einsetzen des mit einem Abschlusselement (10) gekoppelten Rohrelements (8, 8') in die Öffnung (4), wobei das mit dem Rohrelement (8, 8') verbundene Abschlusselement (10, 10') vorzugsweise mit einer innen- oder außenseitigen Wandfläche (6', 6") der Wand (6) in Anlage gebracht wird,
- Koppeln eines zweiten Abschlusselements (10, 10') mit einem mit dem zum ersten Abschlusselement (10) entgegengesetzten Ende des Rohrelements (8, 8'), und
- Auslenken des Rohrelements (8) in axialer Richtung um ein vorbestimmtes (Längen-)Maß mittels einer Kraft und in Anlagebringen des ersten und zweiten Abschlusselements (10) mit den Wandflächen () der Wand (4), so dass mittels der am Rohrelement (8, 8') wirkenden Rückstellkräfte ein Verspannen der Abschlusselemente gegen die Wand erzeugt wird, wobei vorzugsweise wenigstens ein zwischen dem Abschlusselement (10, 10') und der Wand (6) angeordnetes Dichtelement (56) verspannt wird.

20. Verwendung eines elastisch verformbaren Rohrelements (8, 8') zum elastischen Verspannen einer Vorrichtung (1) nach einem der Ansprüche 1 bis 18 zur Durchführung von mindestens einer Leitung (2) durch eine Öffnung (4) in einer Wand (6) und/oder Geschossdecke, gegen zwei voneinander abgewandte Wandflächen (6, 6') der Wand (6).

## Claims

1. A device (1) for leading at least one line (2) through an opening (4) in a wall (6) and/or story ceiling, with
at least one pipe element (8, 8') for receiving the line (2) to be led through the opening (4), and
at least one end element (10, 10') which can be abutted directly or indirectly against a wall surface of the wall (6),
wherein the end element (10, 10') has a coupling portion (12, 12') facing inwards towards the pipe element (8, 8'), wherein the coupling portion (12, 12') can be brought into abutment or engagement with the outer surface (14) of the pipe element (8, 8') for force-fitting and/or form-fitting coupling,
**characterized in that** the pipe element (8, 8') is elastically deformable at least axially in the longitudinal direction of the pipe element (8, 8') in such a manner that in the assembled state, the end element (10, 10') is pressed against the wall (6).

2. The device (1) according to claim 1,
**characterized in that** the coupling portion (12) has at least one coupling element (16, 16') which can be brought into form-fitting engagement with the outer surface (14) of the pipe element (8, 8').

3. The device (1) according to claim 1 or 2,
**characterized in that** the pipe element (8, 8') has recesses (18) and/or projections (20) on its outer surface, in particular is designed as a corrugated pipe, and the coupling portion (12) is designed such that the coupling portion (12) corresponds force-fittingly with at least one recess (18) and/or projection (20).

4. The device (1) according to any one of claims 1 to 3,
wherein the pipe element (8, 8') is configured to be laid running at an angle in the range from 0° to 70° to the wall surface (6', 6") of the wall (6) or story ceiling.

5. The device (1) according to any one of claims 1 to 4,
**characterized in that** the at least one coupling element (16, 16') is designed as an elastically deformable latching hook (22) which can be latched to at least one recess (18) on the pipe element (8, 8'), and/or
**in that** the coupling element (16, 16') extends away from the outside of the end element (10, 10') at an acute angle (α) relative to a longitudinal axis (L) of the pipe element (8, 8').

6. The device (1) according to claims 2 to 5,
**characterized in that** a multiplicity of coupling elements (16, 16') is arranged on the coupling portion (16, 16') distributed over the circumference of the pipe element (8, 8'), wherein preferably coupling elements (12, 12') of different lengths are provided.

7. The device (1) according to claim 6,
**characterized in that** at least two groups of coupling elements (16, 16') are designed with different lengths.

8. The device (1) according to at least one of the preceding claims,
**characterized by** an at least partially elastically deformable collar (34-34‴) with at least two axially adjoining sealing portions (36-40") having cross-sections of the same or different sizes, which can be brought into abutment, preferably sealingly, with one of the end elements (10, 10') on the one hand and with the outer surface of the pipe element (8, 8') on the other hand.

9. The device (1) according to claim 8,
**characterized in that** on the inner surface (42) of the collar (34-34‴), in particular the sealing portions (36-40") thereof, multiple projections (44) are formed which project radially inwards and can be brought into force-fitting and/or preferably form-fitting engagement with the surface (14) of the pipe element (8, 8').

10. The device (1) according to claim 9,
**characterized in that** the projections (44) are designed as circumferential or discrete material webs, preferably designed such that they correspond with the recesses (18).

11. The device (1) according to any one of the preceding claims 8 to 10,
**characterized in that** the collar (34-34‴) and/or the pipe element (8, 8') has a receiving portion (51) on the inside for a sealing plug (48) which can be inserted therein, which sealing plug has at least one passage (52) for leading through the line (2) and is configured to seal with respect to the collar (34) and the line (2) led through.

12. The device (1) according to any one of the preceding claims 8 to 11,
**characterized in that** the collar (34-34‴), on one of its sealing portions (36-40"), has a receiving portion (51, 64) for a sleeve pipe (66) which can be brought into contact therewith and/or a tensioning means (76) which locks the collar (34-34‴) at least with regard to the pipe element (8, 8').

13. The device (1) according to any one of the preceding claims 8 to 12,
**characterized in that** at least one of the sealing portions (36-40") has an outer circumferential surface (42') which widens in cross-section, in particular conically, in the axial direction.

14. The device (1) according to any one of the preceding claims 8 to 13,
**characterized in that** the collar (34-34‴) has an extension portion (72) which adjoins the sealing portion (36, 36') that is the smallest in cross-section, which is preferably connected to the sealing portion (36, 36') by means of a predetermined separation point (70) and is configured to receive a sleeve pipe (66), in particular on the outside.

15. The device (1) according to any one of the preceding claims 11 to 14,
**characterized in that** the sealing plug (48) has at least one radially inwardly and/or outwardly projecting sealing part (54, 54'), preferably a sealing lip.

16. The device (1) according to at least one of the preceding claims,
**characterized in that** on at least one of the end elements (10, 10'), at least one sealing element (56) is arranged which, in the assembled state, is arranged and tensioned between the preferably flange-like end element (10, 10') and the wall (6), and/or
a centering aid (58) is provided for at least the radial alignment of the end element (10, 10') with the opening (4).

17. The device (1) according to at least one of the preceding claims,
**characterized in that** the end element (10, 10'), in addition to its at least one coupling portion (12, 12') for the pipe element (8, 8'), has at least one passage (62) for a media-carrying line.

18. The device (1) according to at least one of the preceding claims,
**characterized in that** the coupling portion (12, 12') has at least one tensioning part which can be varied in cross-section and which is equipped with a tensioning means which can be brought into operative connection on the outside of the tensioning part for force-fitting engagement with the outer surface of the pipe element (8, 8').

19. A method for installing a device (1) according to any one of claims 1 to 18, for leading of at least one line (2) through an opening (4) in a wall (6), comprising the steps of:
- providing or making an opening (4) in a building wall (6);
- coupling a first end element (10, 10') to at least one pipe element (8, 8');
- inserting the pipe element (8, 8') coupled to an end element (10) into the opening (4), wherein the end element (10, 10') connected to the pipe element (8, 8') is preferably brought into abutment with an inner or outer wall surface (6', 6") of the wall (6),
- coupling a second end element (10, 10') to an end of the pipe element (8, 8') opposite the first end element (10), and
- deflecting the pipe element (8) in the axial direction by a predetermined (length) dimension by means of a force and bringing the first and second end elements (10) into abutment with the wall surfaces (6', 6") of the wall (4) so that by means of the restoring forces acting on the pipe element (8, 8'), a tensioning of the end elements against the wall is generated, wherein preferably at least one sealing element (56) arranged between the end element (10') and the wall (6) is tensioned.

20. Use of an elastically deformable pipe element (8, 8') for elastically tensioning a device (1) according to any one of claims 1 to 18 for leading at least one line (2) through an opening (4) in a wall (6) and/or story ceiling against two wall surfaces (6', 6") of the wall (6) facing away from each other.

## Revendications

1. Dispositif (1) destiné au passage d'au moins une conduite (2) à travers une ouverture (4) dans une paroi (6) et/ou une dalle de plancher, comprenant au moins un élément tubulaire (8, 8') destiné à recevoir la conduite (2) devant être guidée à travers l'ouverture (4), et au moins un élément de fermeture (10, 10') pouvant être appliqué directement ou indirectement contre une surface de paroi de la paroi (6), l'élément de fermeture (10, 10') présentant une section de couplage (12, 12') orientée vers l'intérieur en direction de l'élément tubulaire (8, 8'), la section de couplage (12, 12') pouvant être amenée en contact ou en prise avec la surface extérieure (14) de l'élément tubulaire (8, 8') pour un couplage par liaison de force et/ou de forme, **caractérisé en ce que** l'élément tubulaire (8, 8') est déformable élastiquement au moins axialement dans la direction longitudinale de l'élément tubulaire (8, 8'), de telle sorte que l'élément de fermeture (10, 10') est pressé contre la paroi (6) à l'état monté.

2. Dispositif (1) selon la revendication 1, **caractérisé en ce que** la section de couplage (12) présente au moins un élément de couplage (16, 16') pouvant être amené en prise par liaison de forme avec la surface extérieure (14) de l'élément tubulaire (8, 8').

3. Dispositif (1) selon la revendication 1 ou 2, **caractérisé en ce que** l'élément tubulaire (8, 8') présente sur sa surface extérieure des évidements (18) et/ou des saillies (20), en particulier est réalisé sous forme de tube ondulé, et la section de couplage (12) est réalisée de telle sorte que la section de couplage (12) correspond par liaison de forme avec au moins un évidement (18) et/ou une saillie (20).

4. Dispositif (1) selon l'une des revendications 1 à 3, dans lequel l'élément tubulaire (8, 8') est conçu pour être posé en s'étendant à un angle compris entre 0° et 70° par rapport à la surface de paroi (6', 6") de la paroi (6) ou de la dalle de plancher.

5. Dispositif (1) selon l'une des revendications 1 à 4, **caractérisé en ce que** l'au moins un élément de couplage (16, 16') est réalisé sous forme de crochet d'encliquetage (22) déformable élastiquement, pouvant être encliqueté avec au moins un évidement (18) sur l'élément tubulaire (8, 8'), et/ou **en ce que** l'élément de couplage (16, 16') s'étend, côté extérieur de l'élément de fermeture (10, 10'), en s'éloignant selon un angle aigu (α) par rapport à un axe longitudinal (L) de l'élément tubulaire (8, 8').

6. Dispositif (1) selon les revendications 2 à 5, **caractérisé en ce qu'**une pluralité d'éléments de couplage (16, 16') sont disposés sur la section de couplage (12, 12'), répartis sur la circonférence de l'élément tubulaire (8, 8'), de préférence des éléments de couplage (16, 16') de longueurs différentes étant prévus.

7. Dispositif (1) selon la revendication 6, **caractérisé en ce qu'**au moins deux groupes d'éléments de couplage (16, 16') de longueurs différentes sont réalisés.

8. Dispositif (1) selon au moins l'une des revendications précédentes, **caractérisé par** une manchette (34-34‴) déformable élastiquement au moins en partie, comportant au moins deux sections d'étanchéité (36-40") adjacentes axialement, de sections identiques ou différentes, pouvant être amenée en contact, de préférence de manière étanche, d'une part avec l'un des éléments de fermeture (10, 10') et d'autre part avec la surface extérieure de l'élément tubulaire (8, 8').

9. Dispositif (1) selon la revendication 8, **caractérisé en ce que** sur la surface intérieure (42) de la manchette (34-34‴), en particulier de ses sections d'étanchéité (36-40"), sont réalisées plusieurs saillies (44) faisant saillie radialement vers l'intérieur, pouvant être amenées en prise par liaison de force et/ou de préférence de forme avec la surface (14) de l'élément tubulaire (8, 8').

10. Dispositif (1) selon la revendication 9, **caractérisé en ce que** les saillies (44) sont réalisées sous forme de nervures de matière périphériques ou discrètes, de préférence réalisées de telle sorte qu'elles correspondent avec les évidements (18).

11. Dispositif (1) selon l'une des revendications précédentes 8 à 10, **caractérisé en ce que** la manchette (34-34‴) et/ou l'élément tubulaire (8, 8') présente une section de réception intérieure (51) destinée à recevoir un bouchon d'étanchéité (48) pouvant y être inséré, lequel bouchon d'étanchéité présente au moins un passage (52) pour le passage de la conduite (2) et est conçu pour assurer l'étanchéité par rapport à la manchette (34) et à la conduite (2) traversante.

12. Dispositif (1) selon l'une des revendications précédentes 8 à 11, **caractérisé en ce que** la manchette (34-34‴) présente, sur l'une de ses sections d'étanchéité (36-40"), une section de réception (51, 64) destinée à un tube de gainage (66) pouvant être amené en contact avec celle-ci et/ou un moyen de serrage (76) bloquant la manchette (34-34‴), au moins par rapport à l'élément tubulaire (8, 8').

13. Dispositif (1) selon l'une des revendications précédentes 8 à 12, **caractérisé en ce qu'**au moins l'une des sections d'étanchéité (36-40") présente une surface périphérique extérieure (42') qui s'élargit en section dans la direction axiale, en particulier de manière conique.

14. Dispositif (1) selon l'une des revendications précédentes 8 à 13, **caractérisé en ce que** la manchette (34-34‴) présente une section de rallonge (72) adjacente à la section d'étanchéité (36, 36') de section la plus petite, laquelle section de rallonge est de préférence reliée à la section d'étanchéité (36, 36') au moyen d'une ligne de rupture prédéterminée (70) et est conçue pour recevoir, en particulier côté extérieur, un tube de gainage (66).

15. Dispositif (1) selon l'une des revendications précédentes 11 à 14, **caractérisé en ce que** le bouchon d'étanchéité (48) présente au moins une partie d'étanchéité (54, 54') faisant saillie radialement vers l'intérieur et/ou vers l'extérieur, de préférence une lèvre d'étanchéité.

16. Dispositif (1) selon au moins l'une des revendications précédentes, **caractérisé en ce qu'**au moins un élément d'étanchéité (56) est disposé sur au moins l'un des éléments de fermeture (10, 10'), lequel élément d'étanchéité est disposé et serré, à l'état monté, entre l'élément de fermeture (10, 10'), de préférence de type bride, et la paroi (6), et/ou une aide au centrage (58) est prévue pour au moins l'alignement radial de l'élément de fermeture (10, 10') par rapport à l'ouverture (4).

17. Dispositif (1) selon au moins l'une des revendications précédentes, **caractérisé en ce que** l'élément de fermeture (10, 10') présente, en plus de son au moins une section de couplage (12, 12') destinée à l'élément tubulaire (8, 8'), au moins un passage (62) destiné à une conduite véhiculant un fluide.

18. Dispositif (1) selon au moins l'une des revendications précédentes, **caractérisé en ce que** la section de couplage (12, 12') présente au moins une partie de serrage à section variable, laquelle est conçue, en association avec un moyen de serrage pouvant être mis en liaison fonctionnelle avec la partie de serrage côté extérieur, pour amener la partie de serrage en contact par liaison de force avec la surface extérieure de l'élément tubulaire (8, 8').

19. Procédé d'installation d'un dispositif (1) selon l'une des revendications 1 à 18, destiné au passage d'au moins une conduite (2) à travers une ouverture (4) dans une paroi (6), comprenant les étapes suivantes :
- fournir ou réaliser une ouverture (4) dans une paroi (6) de bâtiment ;
- coupler un premier élément de fermeture (10, 10') avec au moins un élément tubulaire (8, 8') ;
- insérer l'élément tubulaire (8, 8') couplé à un élément de fermeture (10) dans l'ouverture (4), l'élément de fermeture (10, 10') relié à l'élément tubulaire (8, 8') étant de préférence amené en contact avec une surface de paroi (6', 6") intérieure ou extérieure de la paroi (6) ;
- coupler un deuxième élément de fermeture (10, 10') avec l'extrémité de l'élément tubulaire (8, 8') opposée au premier élément de fermeture (10), et
- fléchir l'élément tubulaire (8) dans la direction axiale d'une valeur (de longueur) prédéterminée au moyen d'une force et amener le premier et le deuxième élément de fermeture (10) en contact avec les surfaces de paroi de la paroi (6), de sorte que, au moyen des forces de rappel agissant sur l'élément tubulaire (8, 8'), un serrage des éléments de fermeture contre la paroi soit produit, dans lequel, de préférence, au moins un élément d'étanchéité (56) disposé entre l'élément de fermeture (10, 10') et la paroi (6) est serré.

20. Utilisation d'un élément tubulaire (8, 8') déformable élastiquement pour serrer élastiquement un dispositif (1) selon l'une des revendications 1 à 18 destiné au passage d'au moins une conduite (2) à travers une ouverture (4) dans une paroi (6) et/ou une dalle de plancher, contre deux surfaces de paroi (6, 6') opposées de la paroi (6).
